Europäisches Patentamt

**European Patent Office**

**Office européen des brevets**

(19)

(11) Publication number: **0 184 685**
**A2**

(12) # EUROPEAN PATENT APPLICATION

(21) Application number: **85114482.4**

(22) Date of filing: **14.11.85**

(51) Int. Cl.⁴: **F 02 B 73/00,** F 02 B 77/14,
F 16 F 15/26

(30) Priority: **13.12.84 DE 3445409**
**27.06.85 DE 3522988**
**27.06.85**

(43) Date of publication of application: **18.06.86**
**Bulletin 86/25**

(84) Designated Contracting States: **BE FR GB IT NL SE**

(71) Applicant: **KANIUT, Herbert Maximilian, Orrerweg 33/35,**
**D-5000 Köln 71 (DE)**
Applicant: **Kaniut, Claudius H., Orrerweg 33/35,**
**D-5000 Köln 71 (DE)**

(72) Inventor: **KANIUT, Herbert Maximilian, Orrerweg 33/35,**
**D-5000 Köln 71 (DE)**
Inventor: **Kaniut, Claudius H., Orrerweg 33/35,**
**D-5000 Köln 71 (DE)**

(54) **Split-engine for motor-vehicles, with a divided crankshaft, and an engine cross-shaft for auxiliary-drives.**

(57)    To additionally reduce the noxious emissions of motor vehicles, the gasoline or diesel engines are splitted into a primary and a secondary engine, both having own partial crankshafts.

The primary engine is conventionally used, and it drives the vehicle auxiliaries by a novel engine cross-shaft, while the secondary engine is automatically started and clutched-in for higher loads, and automatically separated and stopped under no-load conditions.

The clutching-in and separation of the secondary engine is performed by a novel clutch between the two partial crankshafts, controlled by the accelerator pedal without the driver's help, which also effects an automatical synchronization of the crank positions of the partial crankshafts.

An additional hand-switch can exclude the clutching-in of the secondary engine for motor-queuings.

The split-engine establishes a whole engine family, contributes a multiplicative reduction of noxious emissions, saves additionally fuel, and enables economy-priced engine optionals.

EP 0 184 685 A2

SPLIT - ENGINE FOR MOTOR - VEHICLES,

WITH A DIVIDED CRANKSHAFT, AND AN ENGINE CROSS - SHAFT
FOR AUXILIARY - DRIVES.


BACKGROUND OF THE INVENTION

This invention relates generally to motor-vehicles, as for instance road-vehicles, rail-vehicles, water-vehicles e.t.c., and relates with particularity to road-vehicles having largely reduced exhaust emissions and fuel consumption, having a flexible engine timing, and a flexible degree of turbulence in the combustion chambers, and having controlled engine inertia forces and inertia couples.

One of the major problem associated with the design of modern internal combustion engines for motor-vehicles is to provide means ensuring as small as possible exhaust emissions. But also a small fuel consumption and small engine vibrations have an increased importance. In this respect the reduction of noxious exhaust emissions and fuel consumption have passed an encouraging progress. But in view of the still growing number of operating motor-vehicles the achievements appear not to be satisfactory, and additional means are in great demand.

Thus a cylinder shut-off system has been proposed, which operates by means of the periodically interrupted combustion in some cylinders of the engine. But the results proved not to be acceptable, because after shut-off of some cylinders, the whole engine mechanism is still running, and the internal engine friction remains unchanged. Thus, the power dropped by the shut-off cylinders must be additionally produced by the continually working cylinders, in order to maintain the engine in motion, which does not reduce the fuel consumption, and consequently no reductions are achieved in the amount of exhaust gases and noxious emissions.

But also another aspect should be taken into critical account, which is the generally desired, and as the "ideal" emission gas considered $CO_2$ : - since this gas is still unfit for breathing of man and animals. And when at windless condition large amounts of this heavy $CO_2$ (which is also produced by operating catalyzers!) are exhausted on a cross-road in the town, there will lay down

- 2 -

a suffocating cloud on the cross-road, which pushes all oxygen upwards. Thus also large amounts of this "good" $CO_2$ may result in an unbearable environmental burden! Consequently it is obvious that not only the quality but also the quantity of the exhausted gases are of primary importance, and that the present high degree of motorization requires further improvements or additional means, which together with the known systems would meet the demands, and provide some safety reserves for the future.

A method of improving the conventional means for the reduction of noxious exhaust emissions, and of fuel consumption, as contemplated by the present invention, involves a split-engine, having two partial engines, of which one partial engine is used separately, or both partial engines commonly for the propulsion of the vehicle, and which system represents a novel automobile propulsion technology.

Accordingly, it is an object of the present invention to provide new and improved internal combustion engines for modern motor vehicles.

Another object of the present invention is to provide internal combustion engines with reduced noxious exhaust emissions, and with a reduced fuel consumption.

Another object of the present invention is to provide a new split-internal combustion engine consisting of two self-contained partial engines, named in the specification primary engine and secondary engine, of which each partial engine has its own partial crankshaft, and other partial components, and of which only the primary engine is maintained continuously in motion during the vehicle use.

Another object of the present invention is to provide a novel semi-automatic clutch, installed between the two partial crankshafts, which is starting and clutching-in the secondary engine to the vehicle propulsion system for higher loads, e.g. for high-speed travelling, and which is separating and stopping the secondary engine under no-load conditions, e.g. for low vehicle speeds; and which automatically synchronizes the relative crank positions of both partial crankshafts.

Another object of the present invention is to provide a novel engine cross-shaft, which drives the vehicle auxiliaries, fastened to the vehicle body.

Another object of the present invention is to provide for the primary engine and for the secondary engine differently designed camshafts, induction manifolds, and combustion chambers.

Another object of the present invention is to provide a novel and whole engine family, which is based on the split-engine principle.

Another object of the present invention is to provide quiet running engine embodiments, in which the inertia forces and inertia couples are balanced according to an original principle.

Another object of the present invention is to provide new split-internal combustion engines, which may be combined with all known engine design variants, as well as with all known emission protecting devices.

Another object of the present invention is to provide a new split-internal combustion engine, which enables a multiplicative reduction of noxious emissions, as well as a simultaneous fuel saving.

According to the present invention, the foregoing objects are attained by providing in internal combustion engines a novel split-engine configuration, comprising two self-contained partial engines, the primary engine and the secondary engine, and a novel semi-automatic clutch between them. Both partial engines are positioned one after the other, and when installed longitudinally in the vehicle, the primary engine in the rear, near to the vehicle transmission, the secondary engine in front of it.

The primary engine is maintained continuously in motion and utilized for the propulsion during the vehicle use, as conventional vehicle engines, and it drives also the vehicle auxiliaries by means of an engine cross-shaft; - while the secondary engine will be started and clutched-in to the vehicle propulsion system, by means of the primary engine and its partial crankshaft, for higher loads, e.g. for accelerations and high-speed travellings; and will be separated from the propulsion system and completely stopped under no-load conditions, e.g. for low travelling speeds and for short intermediate stoppings of the vehicle. The clutching-in and separation of the secondary engine is performed by a semi-automatic clutch, which is controlled by the accelerator pedal without any special help of the driver; and which additionally effects an automatical synchronization of the relative crank positions of the two partial crankshafts, to a dynamically optimal common crankshaft.

The semi-automatic clutch consists of a friction clutch and a ratchet mechanism, both connected in parallel, and of a torsional vibration damper, connected in series with the friction clutch and the ratchet mechanism. The inventive semi-automatic clutch has a working principle, which is named: Two-Directional-Function (in German: "Zweirichtungs-Funktion"), and which is characterized by two rotative slipping and working directions between the two clutch halves. One slipping direction and relative rotation direction between the two partial crankshafts is used for the cranking-up and starting of the secondary engine, at which operation the primary engine acts as the starting motor; and the second, which is the opposite, slipping direction and relative rotation direction between the two partial crankshafts is used for the said automatical synchronization of the crank positions, which is continuing as long as the pawls of the ratchet mechanism will drop into their tooth-spaces in the ratchet wheel, with which the automatical synchronization process of the two partial crankshafts is attained and finished. The Two-Directional-Function principle is accompanied by another characteristic, which is a simple under-dimensioning of the friction clutch for the power torque of the secondary engine, which enables the clutch slipping for the automatical synchronization process.

The semi-automatic clutch is activated by pressurized oil, taken from the oil supply-system of the (already) working primary engine, on a signal coming from the accelerator pedal. The disengagement of the semi-automatic clutch results from an oil pressure relieve, occuring again on a signal coming from the accelerator pedal.

The driver get an additional switch on the dash-board, by means of which he can exclude the clutching-in of the secondary engine, which operates by interrupting of the signals coming from the accelerator pedal, after which the primary engine is singly propelling the vehicle.

The camshaft (or camshafts) of the primary engine is (are) constructed for a medium travelling speed and for low idling revolutions, and has (have) e.g. small cam overlappings e.t.c., while the camshaft (or camshafts) of the secondary engine is (are) optimized for a high travelling speed, and has (have) e.g. large cam overlappings e.t.c.

Also the induction manifolds and the combustion chambers of the primary and secondary engine are differently designed, to serv the in both partial engines predominantly and differently used engine revolutions. Accordingly, the induction manifold of the primary engine has turbulence-promoting shapes, which e.g. are spiral ducts; while the induction manifold of the secondary engine has cylinder-charge increasing shapes, which e.g. are straight ducts. And the combustion chambers and pistons of the primary engine preferably have squeezing zones, to increase the turbulence in the combustion chambers; while the combustion chambers of the secondary engine not have squeezing zones.

The split-engine principle establishes a whole engine family, consisting of in-line engines and V-engines; and the split-engines are qualified to be installed longitudinally and transversally in the vehicle.

The in-line split-engines may widely be made vibration-free by means of special crankshaft crank-successions, in combination with a split-balance shaft of primary order. The V-split-engines utilize the prefered V-angle of $90^{\circ}$, and have no balance shaft.

The split-engines may be combined with all known engine design variants, as e.g. with turbo-supercharging, fuel injection systems, 4-valves in each cylinder, used e.g. in the secondary engine; while the primary engine has 4 or less than 4 valves in each cylinder, e.t.c. The split-engine may also be combined with all known emission protecting devices, including the catalyzers. In these combinations the split-engine procedure presents its key-advantage, which is once again nearly to halve the amount of the exhausted engine gases on cross-roads in the towns and during highway motor queuing, and with that nearly to halve also the amount of the exhausted noxious emissions, remaining from the known emission protecting devices. This results in a never before achieved multiplicative reduction of noxious emissions, and in an additional reduction of fuel consumption; by which the split-engine makes a beneficial environmental contribution.

## DESCRIPTION OF THE DRAWINGS

A more complete appreciation of the invented Split—Engine and many of the attendant advantages thereof will be readily apparent by reference to the following detailed des-cription when considered in connection with the accompanying drawings wherein:

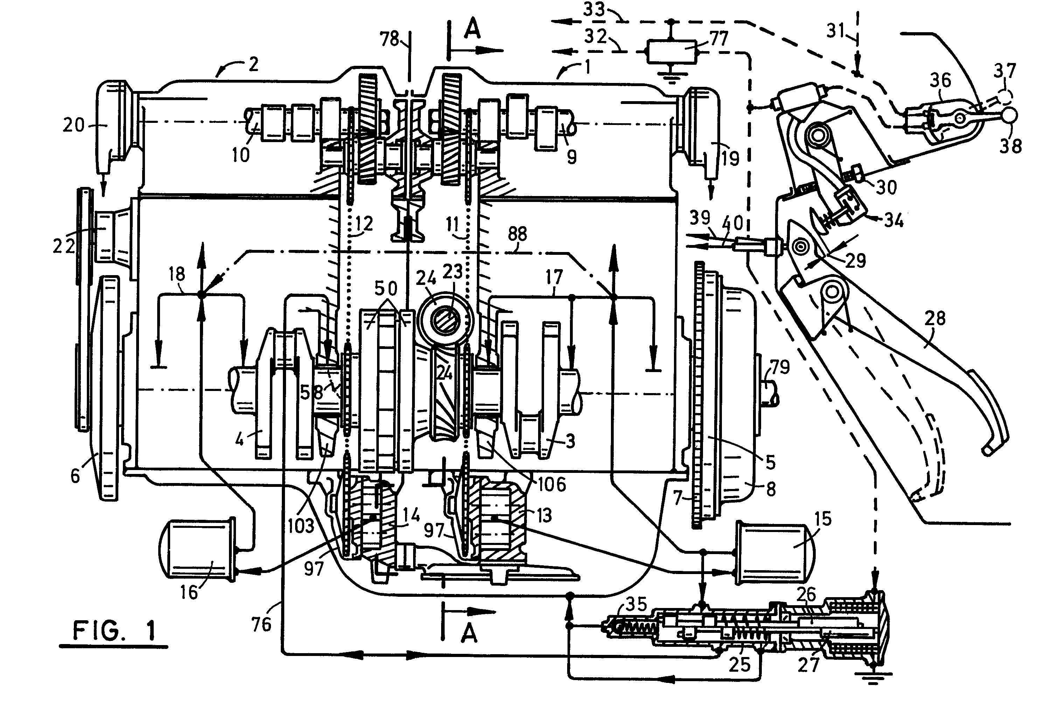

FIG. 1 illustrates

*   the side elevation of an in-line 2 + 2 = 4-cylinder split-engine. with a divided engine block, of which the side wall is partially cut open;

*   the oil-supply systems of the two partial engines, and the electromagnetically operated pressure oil-switch for the semi-automatic clutch between the two partial crankshafts;

*   the accelerator pedal assembly with the electric switches and lines.

The split-engine is shown in a waiting condition in front of a traffic-light: the primary engine has idling revolutions, the pressure oil-switch is in "Off"-position, and the secondary engine is stopped. A pressure exertion on the accelerator pedal starts the secondary engine, and clutches it in to the primary engine.

FIG. 2 is a section taken along line A – A of FIG. 1, showing in a cross-section of the split-engine the roller chain drive for the camshaft, positioned above the crankshaft, the oil-pump, positioned below the crankshaft, and the counter-rotating (split) balance shaft of primary order, positioned laterally to the crankshaft.

Additionally is shown a novel engine cross-shaft, driving the vehicle auxiliaries.

FIG. 3 illustrates the sequence of the throttle flap opening and/or the delivery of the gasoline or diesel-oil injection system of both partial engines, relative to the accelerator-pedal travel.

FIG. 4 illustrates the kinematics of the bowden cable on the throttle-lever or on the lever of the gasoline or diesel-oil injection system of the primary engine.

FIG. 5 illustrates the kinematics of the bowden cable on the throttle-lever or on the lever of the gasoline or diesel-oil injection system of the secondary engine.

FIG. 6 illustrates the half cross-section of the semi-automatic clutch between the partial crankshafts of the primary and the secondary engine, of which the pawls of the ratchet mechanism drop into their tooth-spaces after each complete relative revolution between the two clutch halves and between the two partial crankshafts. The friction clutch-part is shown in the disengaged condition.

FIG. 7 is a section taken along line B - B of FIG. 6, and FIG. 14, showing in a cross-section of the ratchet mechanism the relative positions of its components, illustrating only one of the two pawls, which have a relative offset angle of 180°.

FIG. 8 is the view in direction of arrow "C" of FIG. 7, illustrating the unrolled periphery of the ratchet wheel, and showing the two pawls with an axial track offset, and the two alternating side-lands of the tooth-spaces in the ratchet wheel, by which each pawl drops only into its own tooth-space.

FIG. 9 through FIG. 13 illustrate the performance of the semi-automatic clutch, which is installed between the two partial crankshafts, with clutching-in and separation of the secondary engine, and with the automatical synchronization of the crank positions of the two partial crankshafts.

FIG. 14 illustrates, as an alternative to FIG. 6, the half cross-section of the semi-automatic clutch between the partial crankshafts of the primary and secondary engine, of which the pawls of the ratchet mechanism drop into their tooth-spaces after two complete relative revolutions between the two clutch halves and between the two partial crankshafts. The friction clutch-part is shown in the disengaged condition.

FIG. 15 illustrates the upper plan view of an opened motor-vehicle engine hood, with a longitudinal installation of the inventive split-engine for a vehicle rear wheel drive.

FIG. 16 illustrates the upper plan view of an opened motor-vehicle engine hood, with a transversal installation of the inventive split-engine for a vehicle front wheel drive.

FIG. 17 through FIG. 21 illustrate a split-engine family with in-line engines and V-engines, in which FIG. 17F, designated $2 + 2 = 4$, corresponds with the split-engine of FIG. 1. The numerals designate:

first numeral = number of cylinders of the primary engine;
second numeral = number of cylinders of the secondary engine;
third numeral = number of cylinders of the complete split-engine.

0184685

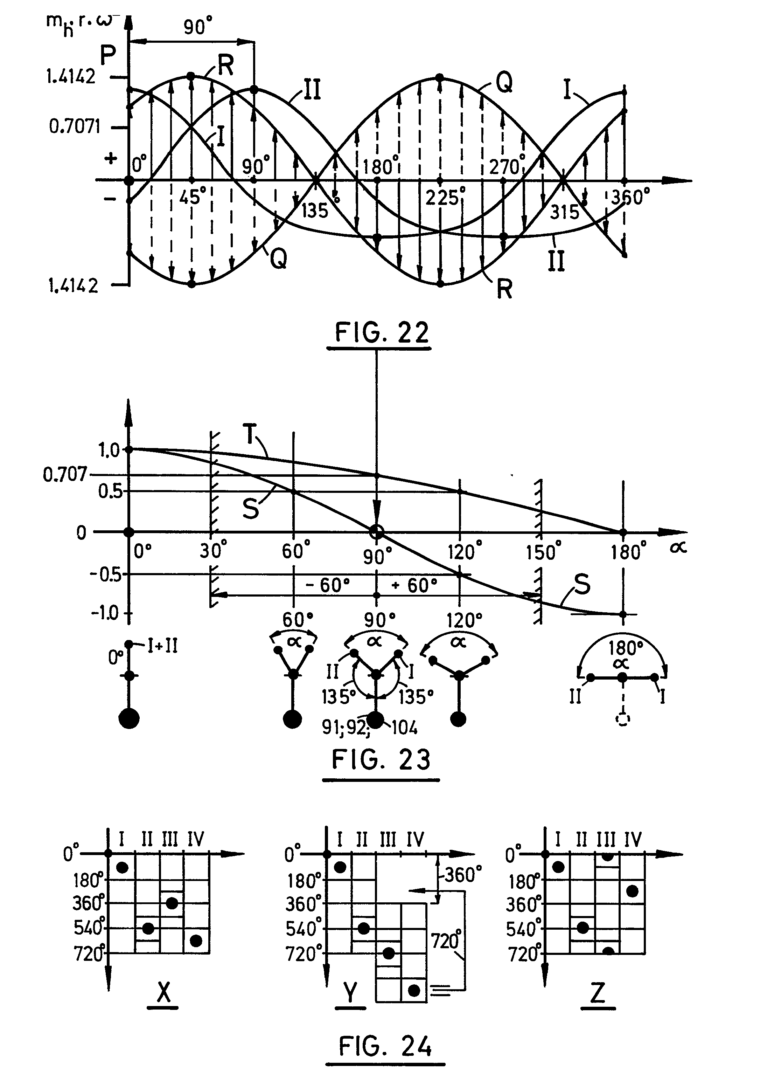

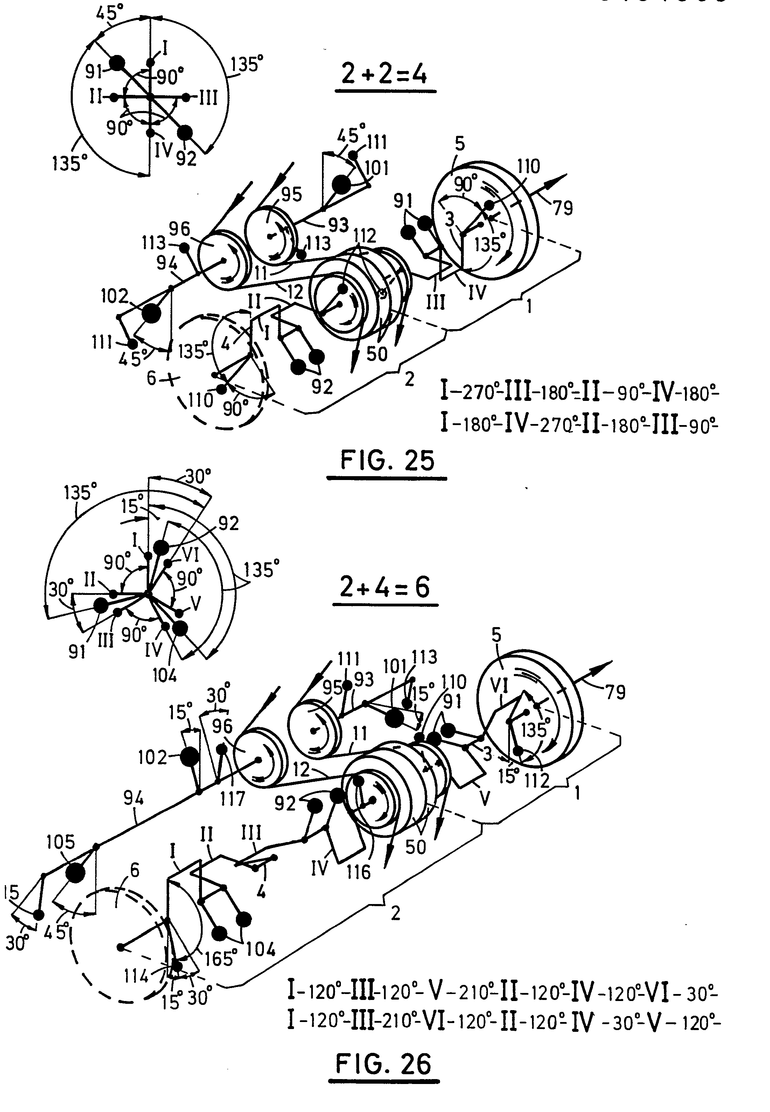

FIG. 22 illustrates a diagram with the course of the inertia forces generated by the reciprocating engine masses of a 2-cylinder engine and crank-group, of which the two cranks have a relative offset angle of 90°, and the balance of these inertia forces by the counterweights shown in FIG. 25; FIG. 26; and FIG. 27. The Roman numerals designate the cylinders of the engine, while the letter "R" illustrates the course of the resulting inertia forces generated by the two cylinders or cranks. The curve "Q" shows the course of the balance forces  generated by counterweights fastened to the crank-group and to a counterrotating balance shaft of primary order, which result in a total balancing.

FIG. 23 illustrates a synoptical diagram concerning the balance of the inertia forces of secondary order inside of a crank-group by means of counterweights, having crankshaft speed. The curve "S" shows the course of the inertia forces at varying offset angles between the two cranks inside of a crank-group; and this curve is cutting the zero line when the crank offset angle is 90°. The curve "T" shows the varying amount of the required counterweight. Total balance of the inertia forces of secondary order will only be achieved, when the two cranks of a crank-group have an offset angle of 90°, and the counterweight ( it is only the half of the totally required counterweight, while the second half is fastened to a counterrotating balance shaft of primary order ) have offset angles of 135° to the cranks ( shown in the middle of the diagram). This arrangement corresponds with FIG. 22.

FIG. 24 illustrates the calculation-scheme, by means of which will be ascertained the changed firing order and the changed firing distances after separation and repeated clutching-in of the two partial crankshafts with a complete relative revolution between them. FIG. 24X is the initial state. FIG. 24Y and FIG. 24Z is the state after a complete relative revolution. The Roman numerals designate the cylinders of the engine. The angle numerals, standing vertically one upon the other, specify the revolutions of the partial crankshafts.

FIG. 25 illustrates in a perspective picture of the complete split-engine the crankshaft and the counterrotating split balance shaft of primary order of a quiet running in-line 2 + 2 = 4-cylinder split-engine, of which each of the two two-cylinder partial crankshafts of the primary and the secondary engine has one crank-group, each of them having two cranks with a relative offset angle of 90°.

The two partial crankshafts are shown in the clutched-in and synchronized condition, and the counterweights result in balancing of the inertia forces and inertia couples of primary and secondary order generated by the reciprocating engine masses of the complete engine. Counterweights for balancing of the inertia forces and inertia couples generated by the rotating engine masses are not shown, to avoid an impairment of the clearness of the illustration. The Roman numerals designate the cylinders of the split engine. The angle numerals, between the Roman numerals, in the first line are the firing distances of an initial state with clutched-in partial crankshafts; - while the angle numerals in the second line show the changed firing order and changed firing distances after separating and stopping of the secondary engine, and its repeatedly starting and clutching-in to the primary engine, but with a complete relative revolution between the two partial crankshafts.

FIG. 26 illustrates in a perspective picture of the complete split-engine the crankshaft and the counterrotating split balance shaft of primary order of a quiet running in-line 2 + 4 = 6-cylinder split-engine, of which, as in FIG. 25, the partial crankshaft of the primary engine has one crank-group with two cranks, having a relative offset angle of $90^{\circ}$, and the four cylinder partial crankshaft of the secondary engine has two crank-groups, each crank-group having two cranks with a relative offset angle of $90^{\circ}$, while between the two crank groups is a relative offset angle of $120^{\circ}$. The two partial crankshafts are shown in the clutched-in and synchronized condition, and the complete engine is as well balanced as the split-Engine according to FIG. 25.

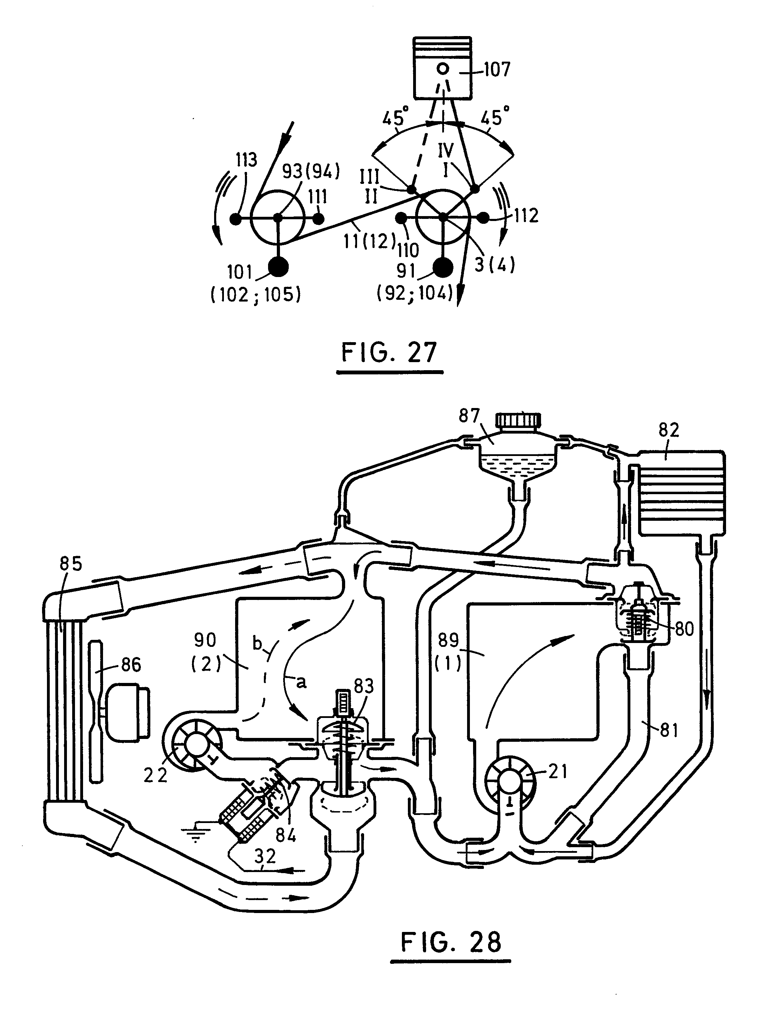

FIG. 27 illustrates a partial crankshaft with a typical crank-group of the present invention and a partial balance shaft, both with counterweights, which are utilized for balancing of the inertia forces generated by the reciprocating engine masses by specially oriented counterweights. The offset angles between the counterweight and the cranks I; II are $135^{\circ}$. Additionally, the counterweights co-operate in pairs in this way that when the counterweights of the crank-group and of the partial balance shaft, that is 91 and 101; or 92 and 102, are equally oriented (as shown), the two pistons 107 of the crank-group (which in the illustration are positioned one behind the other) have equal distances, that is $45^{\circ}$ revolution of the crankshaft, to their top dead center (as shown) or bottom dead center. Each co-operating pair of counterweights: 91 and 101; or 92 and 102 is rotating side by side in a common plane, which in the illustration is the drawing plane.

For balancing of the residual inertia couples of primary order generated by the reciprocating engine masses inside of the crank-groups are utilized additional counterweights, 110 and 112; as well as 111 and 113, fastened to the crankshafts or partial crankshafts, and to the balance shafts or partial balance shafts. Each shaft has two additional counterweights, with a longitudinal offset and an angular offset of $180^{\circ}$ between them. The additional counterweights co-operate also in pairs: they are positioned horizontally at the same piston positions as above, and have offset angles of $90^{\circ}$ to the other counterweights, and offset angles of $135^{\circ}$ to the adjacent cranks of the crankshafts. This arrangement is also shown in FIG. 25, and for the primary engine in FIG. 26. For the secondary engine in FIG. 26 are the offset angles: $30^{\circ}$ to the other counterweights, and $165^{\circ}$ to the adjacent cranks of the crankshaft.

FIG. 28 illustrates the cooling system of the split-engine, in which the unbroken arrows show the water stream during the warming-up operation of the secondary engine by the primary engine.

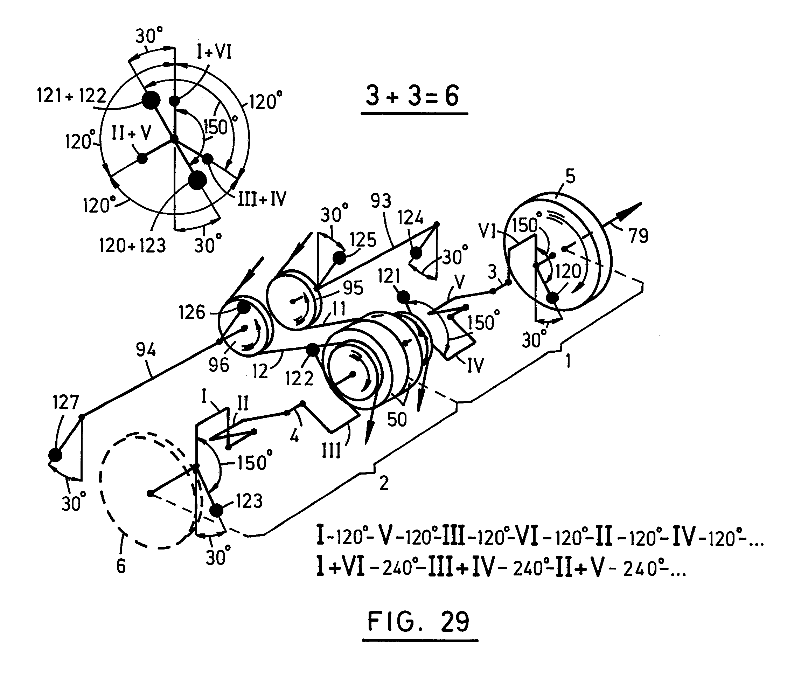

FIG. 29 illustrates in a perspective picture of the complete split-engine the crankshaft and the counterrotating split balance shaft of primary order of a quiet running in-line $3 + 3 = 6$-cylinder split-engine, which is an alternative embodiment of the in-line 6-cylinder split-engine of FIG. 26. The crankshaft of this engine is based on the original crankshaft of a conventional 6-cylinder in-line engine, with the crank-succession of: $I - 120^{\circ} - V - 120^{\circ} - III - 120^{\circ} - - VI - 120^{\circ} - II - 120^{\circ} - IV - 120^{\circ} - ...$, but which for the split-engine use is divided in its middle into the partial crankshaft 3 of the primary engine, and the partial crankshaft 4 of the secondary engine. The semi-automatic clutch is, as in the other split-engines, installed between the two partial crankshafts. The two partial crankshafts and the two partial balance shafts are shown in the clutched-in and synchronized condition.

DETAILED DESCRIPTION AND OPERATION

Referring now more particularly to the drawings wherein like reference numerals designate identical parts in each of the views, and more particularly to FIG. 1 through 29;

there are:

1.  primary engine;

2.  secondary engine;

3.  partial crankshaft of the primary engine;

4.  partial crankshaft of the secondary engine;

5.  flywheel of the primary engine;

6.  flywheel of the secondary engine;

7.  ringgear on the flywheel 5 for a conventional electric starter;

8.  conventional clutch or conventional automatic transmission;

9.  partial camshaft of the primary engine, constructed for a medium travelling speed and for low engine idling revolutions;

10. partial camshaft of the secondary engine, optimized for a high travelling speed;

11. roller-chain drive of the primary engine;

12. roller-chain drive of the secondary engine;

13. oil-pump of the primary engine;

14. oil-pump of the secondary engine;

15. oil-filter of the primary engine;

16. oil-filter of the secondary engine;

17. oil-supply system of the primary engine;

18. oil-supply system of the secondary engine;

19. ignition distributor of 1;

20. ignition distributor of 2;

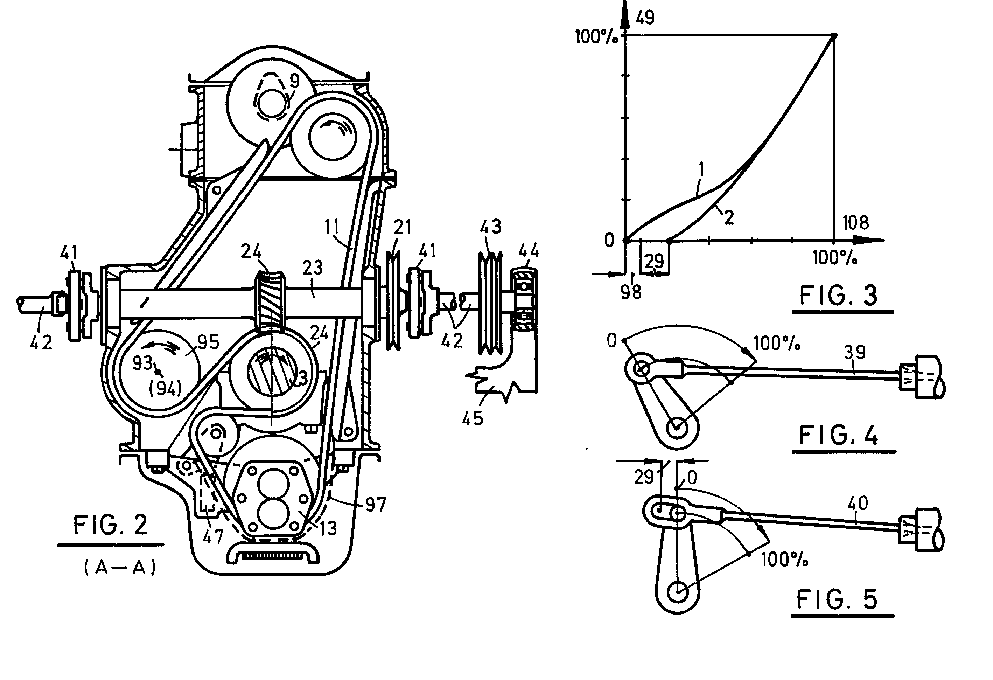

21. water-pump of 1 (in FIG. 2 driving pulley for this water-pump);

22. water-pump of 2;

23. engine cross-shaft, driving the car-auxiliaries;

24. crossed helical gears, driving the engine cross-shaft 23;

25. pressure oil switch, electromagnetically operated;

26. pressure oil switch-position with operating primary engine only;

27. pressure oil switch-position with clutched-in and operating both partial engines;

28. accelerator pedal;

29. adjustable distance for starting and clutching-in operation, and for separating and stopping operation of the secondary engine;

30. adjustment-screw for distance 29;

31. current supply from the conventional ignition switch;

32. current supply to the ignition of the secondary engine;

33. current supply to the ignition of the primary engine;

34. electrical signal transmitter for starting and clutching-in operation, and for separating and stopping operation of the secondary engine. The herewith switched on-or-off current flow switches on-or-off the pressure oil switch 25, and the ignition 32 of the secondary engine;

35. delay valve for releasing of the semi-automatic clutch 50, active during gear change;

36. hand switch on the dash-board for permanent switching-off of the secondary engine;

37. switch position for motor-queuing, with operating primary engine only. With this switch position will also be started the primary engine by means of a conventional electric starter;

38. switch position for high-speed traffic, with stop-and-restart operation of the secondary engine in front of traffic lights, and for hill descends;

39. bowden cable from the accelerator pedal 28 to the carburetor or to the gasoline or diesel-oil injection system of the primary engine;

40. bowden cable from the accelerator pedal 28 to the carburetor or to the gasoline or diesel-oil injection system of the secondary engine;

41. flexible shaft couplings with elastomer-rings or universal joints on both ends of the engine cross-shaft 23;

42. lengthening shaft-pieces, elongating the engine cross-shaft 23 on its both ends;

43. pulleys for the accessory drives;

44. support-bearings cushioned in elastomer-rings. The casings of the elastomer-rings have two parts, for fitting of the drive belts;

45. bracket for support-bearings 44;

46. vehicle auxiliaries, as alternator, air conditioning compressor, power steering pump, e.t.c., fastened to the vehicle-body, and driven by the engine cross-shaft 23;

47. roller-chain tensioner, hydraulically operated, and having a mechanical return lock, separately provided for the roller-chain 11 and 12;

48. cylindrical roller bearings of the friction discs 51/52;

49. throttle flap opening and/or delivery of the gasoline or diesel-oil injection system;

50. semi-automatic clutch between the partial crankshaft 3 of the primary engine 1 and the partial crankshaft 4 of the secondary engine 2;

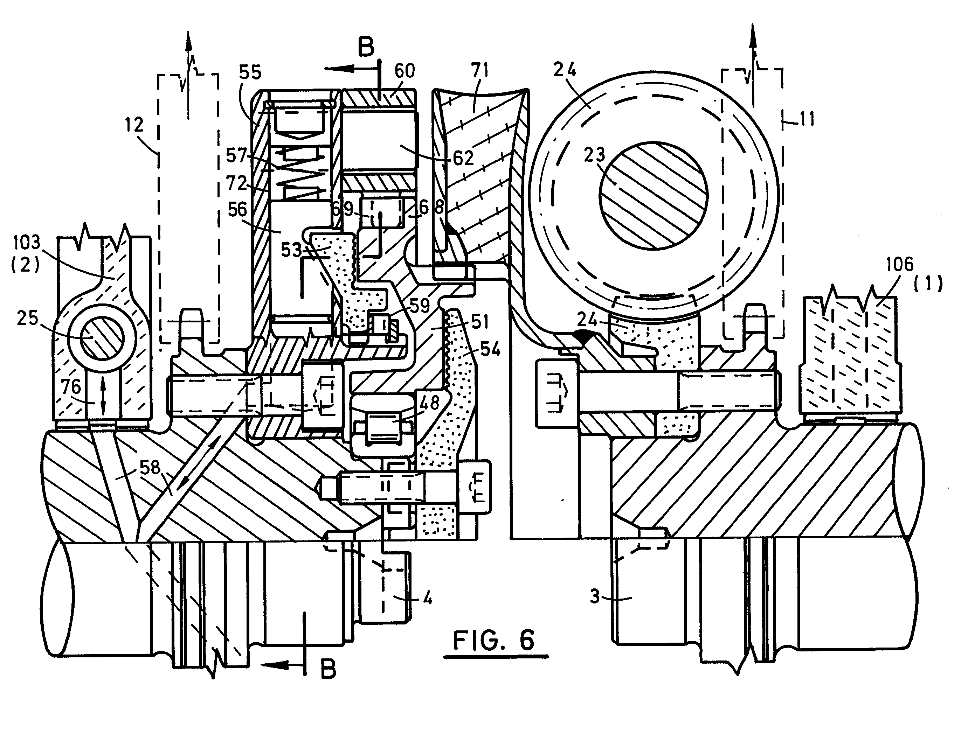

51. friction disc, hardened, of the semi-automatic clutch according to FIG. 6, which at the same time is the ratchet wheel with two diametrally opposite positioned tooth spaces for two pawls 60;

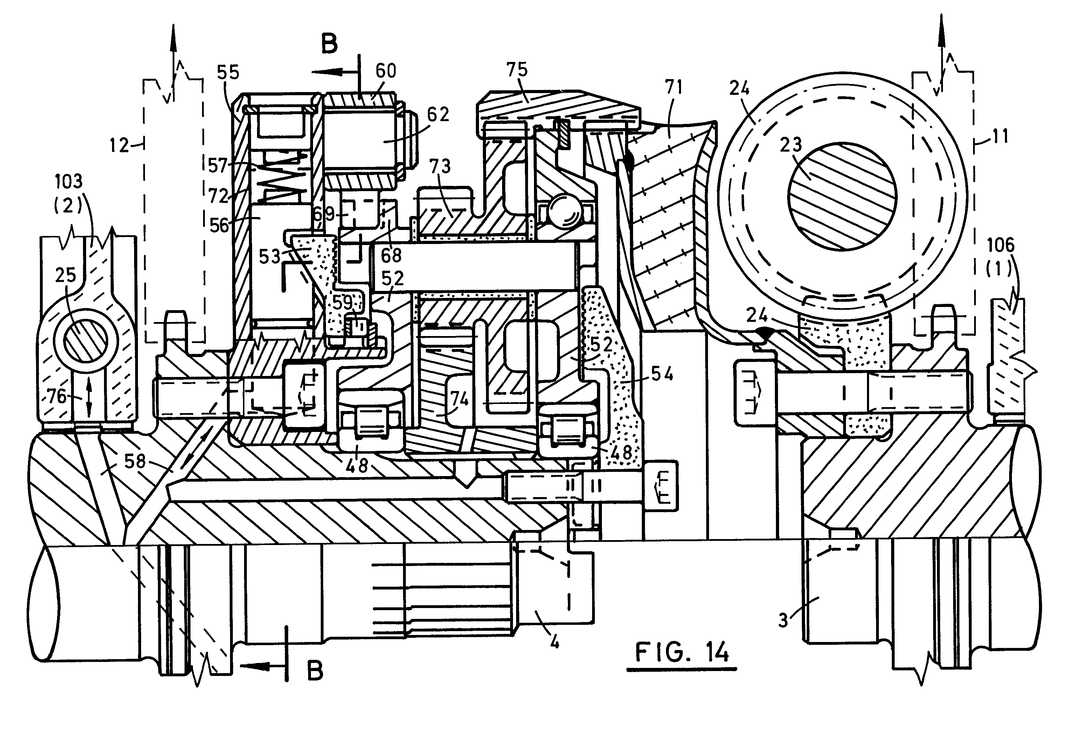

52. friction disc, hardened, of the semi-automatic clutch according to FIG. 14, which at the same time is the ratchet wheel for two pawls 60, and the carrier for the satellite-gears 73;

53. large friction ring, made e.g. of a copper alloy, having narrowly spaced concentric grooves and widely spaced radial grooves on its plane friction face, and having on its other side to the friction face and on its periphery a protruding ring with an inner hollow conical surface;

54. small friction ring, similar to 53, but without the protruding ring;

55. cylinder-body for the semi-automatic clutch 50, in the shape of a disc;

56. actuating pistons, operated by pressurized oil, and having wedge-shaped cut-outs, which correspond with the protruding ring of the large friction ring 53;

57. push-back spring of the piston 56;

58. pressurized oil-way, drilled in the partial crankshaft 4;

59. readjusting spring of undulated ring-type, for the large friction ring 53;

60. pawls, two pieces, positioned on pivots 62;

61. counterweights of the pawls 60;

62. pivots of the pawls 60, two pieces, diametrally opposite fastened to the cylinder-body 55;

63. readjusting springs of the pawls 60;

64. lifting off-lever for the pawls 60, with elastic tooth;

65. balance-beam and shaft for actuating the lifting off-lever 64;

66. cylinder and piston of the balance-beam 65, operated by pressurized oil;

67. readjusting spring of 65;

68. side-land of one of the tooth spaces in the ratchet wheel 51/52;

69. side-land of the second of the tooth spaces in the ratchet wheel 51/52;

70. axial track offset of the two pawls 60;

71. torsional vibration damper, e.g. made of fluor-elastomer, and fitted between the partial crankshaft 3 and the partial crankshaft 4;

72. several radially arranged cylinders;

73. satellite-gears, no less than two, and equally spaced on the periphery;

74. central sun-gear of the planetary gear set, torsion-proof connected with the partial crankshaft 4;

75. outer hollow gear of the planetary gear set, with inside gearing, by the vibration damper 71 torsional-proof connected with the partial crankshaft 3;

76. pressurized oil-line to the semi-automatic clutch 50;

77. delay switch for the ignition of the secondary engine, active during gear change;

78. splitting plane of the engine block flange-connection, in the division area of the two partial engines. The division of the block simplifies the engine assembly and the repairs by exchanging the primary or secondary engine as complete modules;

79. output shaft to the drive system of the vehicle;

80. double-acting two valve thermostat of conventional type, in the upper water outlet-pipe of the primary engine;

81. by-pass pipe of the thermostat 80;

82. heater for the vehicle interior;

83. double-acting two valve thermostat in the lower water inlet-pipe of the secondary engine 2;

84. backflow preventing valve, electromagnetically operated, and electrically connected with the ignition circuit 32;

85. cooler of the vehicle;

86. fan;

87. deaeration container of the cooling system;

88. alternative connection between the oil-supply of the primary engine and the oil-supply of the secondary engine, resulting in a common oil supply system;

89. cooling jacket of the cylinders of the primary engine;

90. cooling jacket of the cylinders of the secondary engine;

91. counterweights of the partial crankshaft 3 of the primary engine 1, for balancing of one half of the inertia forces generated by the reciprocating engine masses (in the specification also named "other counterweights");

92. counterweights of the partial crankshaft 4 of the secondary engine 2, similar to 91 (in the specification also named "other counterweights");

93. partial balance shaft of primary order, of the primary engine 1, counterrotating to the crankshaft, and having crankshaft speed;

94. partial balance shaft of primary order, of the secondary engine 2, counterrotating to the crankshaft, and having crankshaft speed;

93 and 94 together: split balance shaft;

95. driving pinion of the partial balance shaft 93;

96. driving pinion of the partial balance shaft 94;

97. chain-trough;

98. adjustment space for engine idling;

101. counterweight of the partial balance shaft 93 of the primary engine 1, for balancing of the second half of the inertia forces generated by the reciprocating engine masses (in the specification also named "other counterweights");

102. counterweight of the partial balance shaft 94 of the secondary engine 2, similar to 101 (in the specification also named "other counterweights");

During operation of the synchronized primary and secondary engines, rotate the partial balance shafts 93 and 94 also synchronous to each other, and the counterweights 101 and 102 have a constant offset angle of 180$^{\circ}$ (120$^{\circ}$ at the 2 + 4 = 6-cylinder split engine);

103. rear crankshaft main bearing of the secondary engine 2;

104. counterweights of the partial crankshaft 4 of the secondary engine 2, similar to 92 (in the specification also named "other counterweights");

105. counterweight of the partial balance shaft 94 of the secondary engine 2, similar to 102 (in the specification also named "other counterweights");

104 and 105 only for the 2 + 4 = 6-cylinder split-engine according to FIG. 26;

106. front crankshaft main bearing of the primary engine 1;

107. piston;

108. travel of the accelerator pedal 28;

110 and 112. two additional counterweights of the partial crankshaft 3 and 4 (of which each partial crankshaft has only one crank-group, FIG. 25; FIG. 26; and FIG. 27), having an offset angle of 180$^{\circ}$, having offset angles of 90$^{\circ}$ to the other counterweights 91 and 92, having offset angles of 135$^{\circ}$ to the adjacent cranks, and being fastened to the outer crank webs, which balance the residual inertia couples of primary order, generated by the reciprocating engine masses inside of each crank-group;

1. 111 and 113. two additinal counterweights of the partial balance shafts 93 and 94 (for partial crankshafts with only one crank-group, FIG. 25; FIG. 26; and FIG. 27),having an offset angle of $180^{\circ}$, having offset angles of $90^{\circ}$ to the other counter-weights 101 and 102, and being fastened to the ends of the partial balance shafts, which, together with 110 and 112, balance the residual inertia couples of primary order, generated by the reciprocating engine masses inside of each crank-group;

114 and 116. two additional counterweights of the partial crankshaft 4 (which has two crank-groups with an offset angle of $120^{\circ}$, FIG. 26), having an offset angle of $180^{\circ}$, having offset angles of $30^{\circ}$ to the other counterweights 92 and 104, having offset angles of $165^{\circ}$ to the adjacent cranks, and being similar to 110 and 112;

115 and 117. two additional counterweights of the partial balance shaft 94, in FIG. 26 (for partial crankshafts having two crank-groups with an offset angle of $120^{\circ}$), having an offset angle of $180^{\circ}$, having offset angles of $30^{\circ}$ to the other counter-weights 102 and 105, and being similar to 111 and 113;

120 and 121. counterweights of the partial crankshaft 3 of the primary engine 1 (having three cranks with $120^{\circ}$ offset angles, FIG. 29), having an offset angle of $180^{\circ}$, having offset angles of $150^{\circ}$ to the adjacent cranks, and being fastened to the outer crank webs, which balance the inertia couples of primary order, generated by the reciprocating engine masses;

122 and 123. counterweights of the partial crankshaft 4 of the secondary engine 2, similar to 120 and 121;

124 and 125. counterweights of the partial balance shaft 93 of the primary engine 1 (having a crankshaft with three cranks, FIG. 29), having an offset angle of $180^{\circ}$, and being fastened to the ends of the partial balance shaft, which, together with 120 and 121, balance the inertia couples of primary order, generated by the reciprocating engine masses of the primary engine;

126 and 127. counterweights of the partial balance shaft 94 of the secondary engine 2, similar to 124 and 125.

0184685

A vehicle which is propelled by a split-engine, according to the present invention, can be driven as each conventional motor vehicle. The only difference is a special hand switch 36 on the dash-board of the vehicle, which has two switching positions, FIG. 1:

Position 38, for normal driving with stop and restart function, during which the primary engine1 is kept constantly in motion, while the secondary engine 2 will be automatically started and automatically clutched-in to the drive system of the vehicle, as a booster engine, when an increased power is required, e.g. for each acceleration and high-speed travelling, and the secondary engine will be automatically separated from the vehicle drive system and completely stopped, when a reduced power is sufficient, e.g. for each low speed travelling, hill descend, during short stoppings, e.g. in front of traffic-lights, e.t.c.

Position 37, for motor-queuings, e.t.c., during which the primary engine 1 is operating, and the secondary engine 2 is completely stopped.

The automatical starting, clutching-in to the drive system, clutching-off, and stopping of the secondary engine is controlled by the accelerator pedal 28, without any special help of the driver, and which is accomplished by an electrical signal transmitter 34, with on/off functions, that is switching on or off the pressure oil switch 25 for the semi-automatic clutch 50. The signal transmiter is adjustable in its position relative to the pedal travel, 29 and 30, by which the starting point and stopping point of the secondary engine can be varied.

The pressure oil switch 25 is fed by the oil-supply system 17 of the primary engine 1. This secures that, also with a stopped secondary engine and a not working oilpump 14 of this engine, the pressure oil switch 25 and the semi-automatic clutch 50 is sufficiently supplied with pressurized oil. The pressure oil switch and especially its hydraulic part is accommodated inside of the engine block, e.g. in the transverse block-wall of the rear crankshaft main bearing 103 of the secondary engine 2, FIG. 6 and FIG. 14, while the electromagnetic part of said pressure oil switch is positioned on the outside of the engine block.

During the starting operation of the secondary engine 2, the pressure oil switch releases a stream of pressurized oil, which flows through the oil-line 76 to the rear crankshaft main bearing 103 of the stopped secondary engine, and further through oil-ways 58, drilled in the partial crankshaft 4 into the semi-automatic clutch 50.

Alternatively the two oil-supply systems 17 and 18 of the primary engine 1 and of the secondary engine 2 may also be connected with each other by a connection line 88, to form a common oil supply system for both engines. In this case may be dropped the oilpump 14 and the oilfilter 16 of the secondary engine.

The operation of the conventional clutch 8 and of the hand shifted transmission, or the operation of an automatic transmission, may be carried out as in conventional vehicles.

When beginning a drive, the split-engine will es usual be started by a starting key, which actuates a conventional electric starter motor; while the hand switch 36 on the dash-board is in the switch position 37, and only the primary engine 1 will be cranked-up and started. This requires a substantially smaller electrical effort than at present.

The dynamical features of a multi cylinder reciprocating piston internal combustion engine make it necessary that the cranks of the crankshaft have defined relative offset angles, to balance the inertia forces and inertia couples of the complete engine.
- However, this balancing ability get lost partially or completely, when a crankshaft of a multi cylinder engine will be divided into two partial crankshafts , and this partial crankshafts will again be connected with each other by means of a simple friction clutch.

If the original advantages, concerning the balancing of the inertia forces and inertia couples, shall get back their effectivity, it is necessary to connect the two partial crankshafts with exact the same relative crank positions as before, so that the cranks receive again their original relative offset angles. This type of connection can follow only after each complete relative revolution between the two partial crankshafts; - but which after one relative revolution, and at a four-cycle engine, results in a change of the firing order. Is it intended to maintain also the firing order, must the connection follow after two complete relative revolutions of the two partial crankshafts.

For these reasons it is necessary to synchronize the relative crank positions of the two said partial crankshafts 3 and 4, which is automatically accomplished by the semi-automatic clutch 50 installed between the two partial crankshafts, and which periodically connects or separates them.

The semi-automatic clutch 50, Fig. 6 through FIG. 14, has a so named Two-Directional-Function, which is characterized by two rotative working directions between the two clutch halves. The semi-automatic clutch consists of:

  \*    a friction clutch 51/52; 53; 54; which operates in both relative slipping directions: forwardly and rearwardly;

  \*\*    a ratchet mechanism 51/52; 60; 61; 62; having only one drop-in position of the pawls 60 after each complete relative revolution between the two clutch halves and partial crankshafts 3 and 4, and being connected in parallel with the above specified friction clutch;

  \*\*\*    an alternative ratchet mechanism, with an additional planetary gear set 73; 74; 75; FIG. 14, having only one drop-in position of the pawls 60 after two complete relative revolutions between the two clutch halves and partial crankshafts 3 and 4; and

  \*\*\*\* a torsional vibration damper 71, being connected in series with the above specified friction clutch and ratchet mechanism.

The semi-automatic clutch 50 has the following functions:

a)    a start cranking-up of the secondary engine 2, for which the primary engine 1 is utilized as the starting motor, and the friction clutch enables a bumpless cranking-up operation;

b)    an automatical synchronization of the relative crank positions between the two partial crankshafts 3 and 4, and their connection to a dynamically optimal complete crankshaft. This is accomplished according to the present invention by a special dimensioning of the friction clutch, which in its torque transfer ability is sufficient for the cranking-up torque of the secondary engine 2, - but which is not sufficient, that means: it is under-dimensioned, for the transfer of the power torque of the working secondary engine 2. Thus, the fully engaged friction clutch is slipping-through after the start of the secondary engine and when the power torque is applied; - but now, as said, into the other relative slipping direction as during the starting operation(!). And this slipping is continued so long as the pawls 60 of the ratchet mechanism drop into their tooth-spaces in the ratchet wheel 51/52 (which also is the friction disc), and take over the transfer of the power torque of the working secondary engine 2. This finishes the automatical synchronizing operation.

c) separation of the secondary engine 2 from the primary engine 1, when the power of the secondary engine is no longer required, e.g. during an intermediate stop in front of a. traffic light , during a motor-queuing, or during a hill-descent.

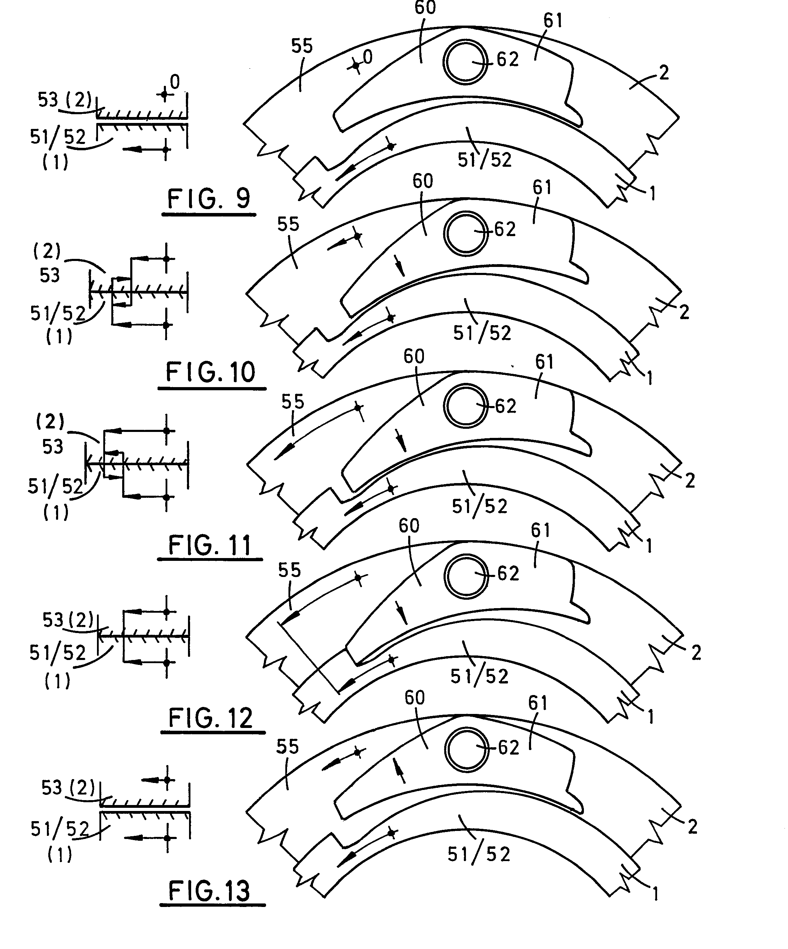

The clutching-in and separating operation of the two partial crankshafts, and the synchronization process, are shown in the FIG. 9 through FIG. 13, together with the kinetic quantities illustrated by vectors. The left sides of the drawings show the conditions of the friction clutch with two-directional-function in disengaged and engaged positions, and especially FIG. 10 and FIG. 11 show, by two small vectors, the relative two slipping directions between the friction disc 51/52 and the friction rings (only 53 is shown). The right sides of the drawings show the ratchet mechanism, together with a pawl, and a sector of the ratchet wheel with a tooth-space.

FIG. 9 illustrates the initial state:

The friction clutch is disengaged. The pawl 60 is lifted. Only the primary engine 1 is rotating. For starting of the secondary engine and for its clutching-in to the primary engine, there will be conducted pressurized oil into the clutch cylinders 72 and 66 (not shown). This result in the following actions:

FIG. 10. The friction clutch 51/52; 53; will be engaged, and it starts the secondary engine 2. The pawl(s) 60 will be lowered onto the ratchet wheel, – but the pawl(s) does not drop into its tooth-space(s), because the revolution speed of the secondary engine 2 is in the initial-phase smaller than the revolution speed of the primary engine 1.

FIG. 11. The secondary engine 2 increases its power and revolutions relatively to the primary engine 1, the friction clutch 51/52; 53; slips, – but now in the opposite relative slipping direction as during the starting operation –, and the pawl 60 approaches to its tooth-space. This represents the automatical synchronizing operation of the two partial crankshafts 3 and 4.

FIG. 12. The pawl 60 dropped into its tooth-space. The primary engine 1 and the secondary engine 2 are rotating with the same speed, and the two partial crankshafts 3 and 4 are connected with each other with predestinated relative crank positions. This finishes the automatical synchronizing operation.

In order to separate again and stop the secondary engine 2, the oil pressure in the clutch cylinders 72 and 66 will be released

Split–Engine for Motor–Vehicles.          0184685

(lowered), and the oil conducted back into the oil pan of the engine, which is accomplished by switching–off of the pressure oil switch 25. Simultaneously will also be switched–off the ignition and/or the fuel injection of the secondary engine. These signals result in the following actions:

FIG. 13. The friction clutch 51/52; 53; will be disengaged. The secondary engine 2 slows down its revolutions, by which the pawl(s) 60 will also be disengaged. And to avoid that the pawl(s) leap up and down over its tooth–space during the disengaged condition of the semi–automatic clutch, the pawl(s) will be lifted–off from the ratchet wheel. After that the primary engine 1 continues running single.

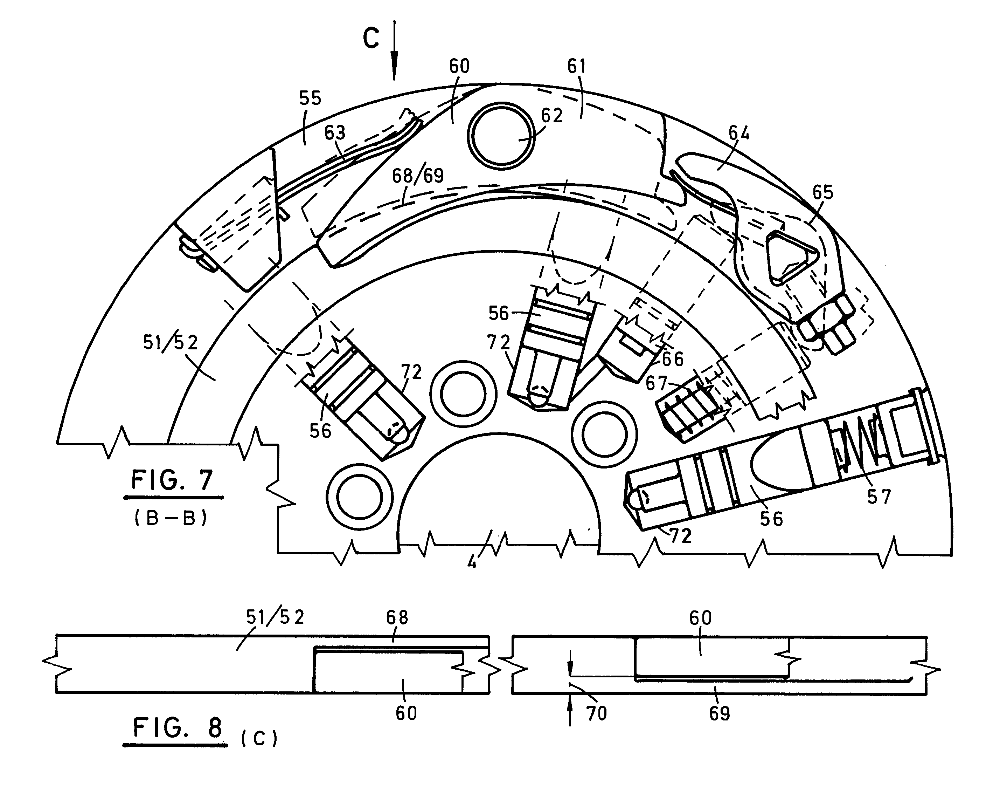

The friction clutch is an oil wet disc clutch, consisting of a hardened friction disc 51/52, and of two friction rings 53 and 54, positioned on both sides of the friction disc. The large friction ring 53 will be axially moved and pressed against the friction disc; while the friction disc yields, moving axially in its cylindrical roller bearing 48, until the friction disc comes also in contact with the axially fixed small friction ring 54. The pressing of the large friction ring 53 against the friction disc is effected by several actuating pistons 56 with wedge–shaped cut–outs, which are radially arranged in the cylinder body 55 of the semi–automatic clutch. The pistons are moving radially outwardly, and by the wedge–action between the piston cut–outs and a hollow conical surface in a protruding ring of the large friction ring 53, the friction ring get an axial movement. The cylinder body 55 and the small friction ring 54 are fixed to the partial crankshaft 4 of the secondary engine; and the large friction ring 53 is torsion–proof, but axially movable connected with the same partial crankshaft 4. The friction disc 51/52 is driven by the partial crankshaft 3 of the primary engine 1 by means of the torsional vibration damper 71. Within of the ratchet mechanism are also used lifting off–levers 64, one lever for each pawl 60, FIG. 7 and FIG. 13. Each lifting off–lever is connected with the piston 66 and the readjusting spring 67 – both accommodated in the cylinder body 55 – by means of a short shaft 65, borne in the cylinder body, and a small balance beam, placed on the other side of the cylinder body.

The readjusting spring 67 is so strong that it overpowers the readjusting spring 63 of the pawl 60, and lifts–off the pawl. When, however, pressurized oil is conducted into the cylinders of the semi–automatic clutch, the oil enters, through an intermediate bore in the cylinder body 55, also into the cylinder of the piston 66, which overpowers the readjusting spring 67, and the pawl(s) 60 are lowered onto the friction disc 51/52.

The two diametrally opposite positioned pawls 60 must, each of them, drop only into the right, that is into its own, tooth-space in the ratchet wheel 51/52, if the requirement shall be met that the ratchet mechanism have only one engagement position of the pawls after each complete relative revolution of the two partial crankshafts. This will be accomplished by an axial offset 70 of the two pawls, by equiping the two tooth-spaces in the ratchet wheel with alternately positioned side-lands 68 and 69, FIG. 8, preferably on one outside of each tooth space, and by an axial offset of the tooth-spaces, so that the pawls cannot drop into the wrong tooth-spaces (after a half relative revolution) since they are sliding-over on the side-lands.

The hitherto described semi-automatic clutch 50 was essentially relating to the simpler embodiment of the clutch according to FIG. 6, which, as said, clutches-in after each complete relative revolution of the two partial crankshafts 3 and 4. - Shall, however, the semi-automatic clutch, for maintaining of the original firing order and firing distances, clutch-in after two complete relative revolutions of the two partial crankshafts, it is necessary to adopt the alternative embodiment of the semi-automatic clutch according to FIG. 14, which additionally to the simpler embodiment of the clutch has integrated a planetary gear set 73; 74; 75; with a gear ratio of 1/2. In this clutch embodiment is the friction disc 52 also carrier of the satellite gears 73, the central sun-gear 74 of the planetary gear-set is torsion-proof fastened to the partial crankshaft 4, and the outer hollow gear 75 is torsion-proof connected with the partial crankshaft 3 by means of the torsional vibration damper 71.

The mode of operation of this semi-automatic clutch is based on that when the friction clutch is disengaged and the secondary engine 2 is stopped, the working primary engine 1 drives the satellite carrier 52 with its halved revolution speed only. Which means that at a complete revolution of the partial crankshaft 3, the satellite carrier carries out only a half revolution. But since the satellite carrier 52 is at the same time also the ratched wheel for the pawls 60, and the pawls are dropping into their tooth-spaces only after a complete relative revolution between the ratchet wheel and the partial crankshaft 4, the partial crankshaft 3 must carry out for it two complete revolutions.

Split-Engine for Motor-Vehicles.                    0184685

The semi-automatic clutch according to FIG. 14 with the planetary gear-set is more expensive and has a larger constructional length than the simpler clutch embodiment according to FIG. 6. Therefore the inventors investigated possibilities always to utilize the simpler embodiment of the semi-automatic clutch, even if some changes in the engine design would be necessary for it.

In order to clarify these possibilities, there has been carried out a study, which had also the objective, to conceive a principle small engine unit for internal combustion in-line split-engines, which e.g. would be suitable for a small primary engine. The results of the study are shown in FIG. 22 and FIG. 23, and the found out principle small engine unit has two engine cylinders.

According to FIG. 22, the two-cylinder principle in-line engine unit has a crankshaft with a crank-group, consisting of two cranks, that have a relative offset angle of $90^o$. When such a crankshaft, equiped with the corresponding two connecting rods and two pistons, will be rotated, the two curves of the inertia forces "I" and "II" of the two engine cylinders – generated by the reciprocating engine masses only –, will produce a resultant inertia forces curve "R" of primary order, which substantially equals to a sinusoidal curve. This inertia force-course makes it possible, to balance the resultant forces by means of a counterrotating balance shaft of primary order, and especially by two counterrotating couterweights, one counterweight fastened to the crankshaft, with offset angles of $135^o$ to each crank, the second counterweight fastened to the balance shaft, which both are producing a counteracting sinusoidal inertia force- curve "Q"; and by which the inertia forces generated by the reciprocating engine masses will be nearly completely balanced (the inaccuracy amounts to: +/- 1.1% for $\lambda$ = 1/4; and +/- 1.6% for $\lambda$ = 1/3.5; and it comes primarily into being by the inertia forces of fourth order). The required counterweight magnitudes are resulting from the counteracting force-magnitudes of primary order, to be produced, which at the crankshaft and at the balance shaft, in each case, amount to 0.7071 $m_h \cdot r \cdot \omega^2$; ($m_h$ – for the reciprocating mass of one engine cylinder; r – for the crank radius); and for the specified counteracting force-magnitudes, to be produced, are also claimed adjacent force-ranges of +/- 1.0 $m_h \cdot r \cdot \omega^2$; because counteracting forces inside of these ranges are also producing advantageous results within the scope of the present invention. The same is also valid for the above specified offset angles of $90^o$ between the two cranks, and $135^o$ between the counterweight of the crankshaft and the

- 24 -

two cranks, which represent optimal values, FIG. 23. Also for these angles will be claimed adjacent offset angle-ranges: for the cranks +/- 60° on both sides of the optimal value, that is from 30° to 150° offset angles between the cranks; and for the counterweights relative to the cranks, and corresponding with the above tolerances, +/- 30° on both sides of the optimal value, that is from 105° to 165° offset angles between the counterweights and the cranks (in FIG. 23 made plain by oblique hatching).

This crank-group principle is utilized for a 2 + 2 = 4-cylinder in-line split-engine according to the present invention, which has a divided crankshaft and a counterrotating split balance shaft of primary order according to FIG. 25. This split-engine has a running quietness as a conventional 6-cylinder engine, or as a conventional 4-cylinder engine equiped with two balance shafts of secondary order, e.g. according to the German publication DOS 24 55 667 (Japanese owner), - but utilizes only a single balance shaft of primary order, which is much similer and cheaper.

In this 4-cylinder split-engine are utilized crank-groups, consisting of the two cranks of the partial crankshaft 3 of the primary engine 1, and of the two cranks of the partial crankshaft 4 of the secondary engine 2, analogous to FIG. 22 and FIG. 23; and in each crank -group the two cranks have a relative offset angle of 90°. The counterweights 91 and 92, fastened to the partial crankshafts, and shown in FIG. 25, have offset angles of 135° to the cranks. After clutching-in of the two partial crankshafts 3 and 4, and after synchronizing their relative crank-positions, have the counterweights 101 and 102, fastened to the partial balance shafts, constant offset angles of 180°. All specified counterweights are balancing the inertia forces and the inertia couples generated by the reciprocating engine masses, when, according to FIG. 27, inside of each crank-group, the in pairs co-operating counterweights fastened to the crank-group and to the belonging to it partial balance shaft, that is 91 and 101; or 92 and 102, are equally oriented, and when the two pistons 107 of each crank-group have equal distances to their top dead center (as shown) or bottom dead center, that is, in each case, 45° revolution of the crankshaft; while each co-operating pair of counterweights, that is 91 and 101; or 92 and 102, is rotating side by side in a common plane, which in FIG. 27 is the drawing plane.

Split-Engine for Motor-Vehicles.                    0184685

The corresponding crankshaft front view-silhouette of the complete crankshaft has a cross-shape, FIG. 25, and the crank-succession is: $I - 90° - II - 90° - IV - 90° - III - 90° - ...$ The offset angles of $90°$ between the two cranks, inside of each crank-group, is also producing another advantage, which is a rotative-force diagram, having only small oscillating forces generated by the reciprocating engine masses, so that remaining are almost only the oscillating gas-pressure forces.

Additionally the exhaust pipes of two adjoining engine cylinders, when they are belonging to one crank-group, may be joined with each other already at the exhaust ports of the engine cylinder head, and the exhaust gases may be led off by means of a common exhaust pipe without power loss; wherewith may be omitted the heavy cast iron exhaust collectors, which saves weight.

The specified 4-cylinder split-engine is designed for usage of the simpler and shorter embodiment of the semi-automatic clutch 50 according to FIG. 6. But this result in somewhat unequal* firing distances of the engine, which are: $270° - 180° - 90° - 180° - ...$ and after the separation and repeated clutching-in of the two partial crankshafts with one complete relative revolution: $180° - 270° - 180° - 90° - ...$, which, in regard of the firing distances, is the same.

For definition of the firing distances and of the two different firing orders of a split-engine, is serving the calculation scheme according to FIG. 24, shown as an example for a $2 + 2 = 4$-cylinder in-line split-engine. At this example are the resultant firing order differences: $+/- 1/40$ sec. during idling speed with 600 RPM, and $+/- 1/400$ sec. during full power speed with 6000 RPM, which at these high revolutions disappears, and will not be perceived. Much more important, due to the high revolutions, is on the contrary the balancing of the engine, which for this engine design is very well, and which should result in a quiet engine running.

The somewhat unequal firing distances can even be of advantage, because they are counteracting to torsional resonances in the torsional elastic driving system of the vehicle.

-----------------------------------------------------------------

\* Equal firing or cycle distances have in those days been taken over from piston steam engines, and especially from steam locomotives, where they were imperative for secured startings.

The specified 4-cylinder in-line engine embodiment with a cross-shaped crankshaft silhouette according to FIG. 25 will also be provided for quiet running non-split in-line engines. For this purpose the two partial crankshafts 3 and 4, and the two partial balance shafts 93 and 94, will be permanently connected into a one piece crankshaft, and into a one piece balance shaft of primary order, with the in FIG. 25 shown relative positions of the partial crankshafts and partial balance shafts, and without the semi-automatic clutch 50.

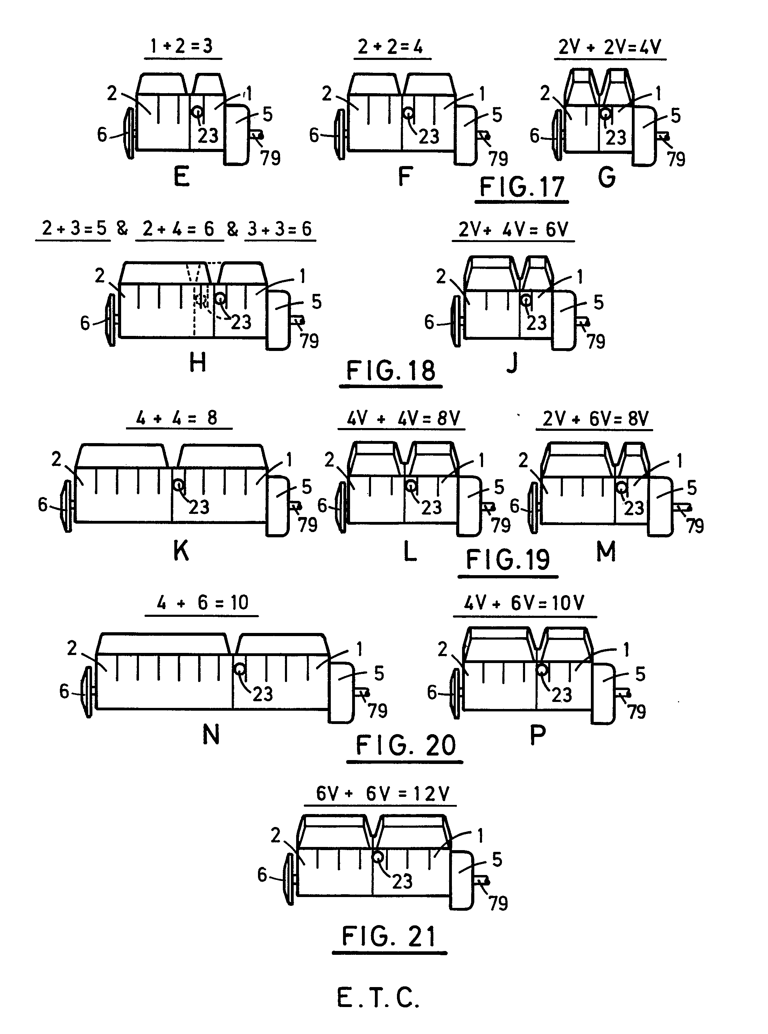

This 4-cylinder engine can again be introduced into larger split-engines as quiet running partial engines, so for instance into the split-engines $4 + 4 = 8$ according to FIG. 19K; $4 + 6 = 10$ according to FIG. 20N; e.t.c ., and this again with utilization of the semi-automatic clutch 50 between the primary and the secondary engine, in accordance with the present specification and claims.

The same principle, based on crank-groups, cnsisting of two cranks with a relative offset angle of $90^{\circ}$, and on a couterrotating split balance shaft of primary order, which enable balancing of the inertia forces and inertia couples generated by the reciprocating engine masses, may also be utilized for larger quiet running split-engines, which are specially suited for the usage of the simpler and shorter embodiment of the semi-automatic clutch 50 according to FIG. 6. This is illustrated for a $2 + 4 = 6$-cylinder in-line split-engine in FIG. 26. This 6-cylinder engine embodiment is of a special reasonable price, because it can be combined out of a production 4-cylinder engine, as the secondary engine, and an added 2-cylinder primary engine. The crankshaft of the 4-cylinder engine will be modified in accordance with the above specified crank-group principle, but comprising in this case two crank-groups, with a relative offset angle of $120^{\circ}$. The added 2-cylinder primary engine has a partial crankshaft with one crank-group of the before specified type, and as used in the $2 + 2 = 4$-cylinder in-line split-engine. After clutching-in of the two partial crankshafts 3 and 4, and after synchronizing of its relative crank positions, rotate the, in this case, three crank-groups with relative offset angles of $120^{\circ}$, while each crank-group having, as said, two cranks with a relative offset angle of $90^{\circ}$. Also the two partial balance shafts 93 and 94 are synchronous rotating with their counterweights 101; 102; and 105, which also have relative offset angles of $120^{\circ}$. Moreover, the inside of each crank-group in pairs co-operating counterweights fastened to the crank-group and to the belonging to it partial balance shaft, that is: 91 and 101; or 92 and 102; or 104 and 105, are equally oriented, FIG. 27, when the two pistons 107 of each crank–group have equal distances to their top dead center (as shown) or bottom dead center, that is, in each case, $45^o$ revolution of the crankshaft; while each co-operating pair of counterweights, that is: 91 and 101; or 92 and 102; or 104 and 105, is rotating side by side in a common plane, which in FIG. 27 is the drawing plane. The corresponding crankshaft front view–silhouette of the complete crankshaft shows FIG. 26, and the crank–succession is: I – $90^o$– II – $30^o$– III – $90^o$– – IV – $30^o$– V – $90^o$– VI – $30^o$–... FIG. 26 is also showing the firing distances and the two types of firing orders. Also at this split–engine, the exhaust pipes of two adjoining engine cylinders may be joined with each other already at the axhaust ports of the engine cylinder head, when the two cylinders are belonging to one crank– group; by which can be omitted the heavy cast–iron exhaust collectors.

The hitherto specified counterweights 91; 92; 101; 102; 104; and 105, also named "other counterweights", are balancing the inertia forces of primary and secondary order, the inertia couples of secondary order, and to some extent also the inertia couples of primary order generated by the reciprocating engine masses of the complete engine; – but they are not in a position completely to balance the inertia couples of primary order of each partial engine and of the complete engine, because these counterweights are rotating in planes, which inside of each crank–group are positioned between the planes of the two cranks of the crank–group, which produces residual inertia couples of primary order. To balance also these residual inertia couples, additional counterweights: 110; 112; 114; and 116, are fastened to the front and rear ends of the partial crankshafts 3 and 4, FIG. 25; FIG. 26; and FIG. 27; and additional couter- weights : 111; 113; 115; and 117, are fastened to the front and rear ends of the partial balance shafts 93 and 94, FIG. 25; FIG. 26; and FIG. 27. Each of the partial crankshafts and partial balance shafts get two additional counterweights, which besides of their longitudinal offset have also an angular offset of $180^o$; and which at each partial crankshaft and at the partial balance shaft, co–operating with said partial crankshaft, are additionally so oriented that when the additional counterweights at the front ends of the partial crankshaft and of the partial balance shaft are directed parallel downwards, the additional couterweights at the rear ends of the same partial crankshaft and of the same partial balance shaft are directed parallel upwards.

The offset angles of the additional counterweights to the other counterweights at the partial crankshafts and at the partial balance shafts, and the magnitudes of the additional counterweights will be defined as for a conventional balance shaft of primary order, but at the split-engines, separately for each partial engine. These result in the following values:

a)   for the primary engine and for the secondary engine, when each of them have partial crankshafts with only one crank-group, according to FIG. 25; FIG. 26; and FIG. 27:

offset angles of the additional counterweights to the other counterweights of $90^o$, and at the same time offset angles of the additional counterweights to the adjacent cranks of the partial crankshafts of $135^o$; and the additional counterweights are producing a counter inertia-couple of primary order of $0.3535\, m_h.r.\,\omega^2.a$; at each partial crankshaft and at each partial balance shaft;

b)   for the secondary engine 2, when it has a partial crankshaft with two crank-groups, having a relative offset angle of $120^o$, FIG. 26:

offset angles of the additional counterweights to the other counterweights of $30^o$, and at the same time offset angles of the additional counterweights to the adjacent cranks of the partial crankshaft of $165^o$; and the additional counterweights are producing a counter inertia couple of primary order of $0.3535\, m_h.r.\omega^2.a$; at the partial crankshaft and at the partial balance shaft;

c)   for the 4-cylinder engine according to claim 9, with a crankshaft having two crank-groups, with a permanent relative offset angle of $180^o$:

offset angles of the additional counterweights to the other counterweights of $90^o$, and at the same time offset angles of the additional counterweights to the adjacent cranks of the crankshaft of $135^o$; and the additional counterweights are producing a counter inertia couple of primary order of $0.707\, m_h.r.\,\omega^2.a$; at the crankshaft and at the balance shaft.

For the specified offset angles of the additional counterweights to the other counterweights are also claimed adjacent offset angle ranges of $+/- 30^o$, and for the magnitudes of the additional counterweights, and especially for the magnitudes of the produced counter inertia couples of primary order are also claimed counter inertia couple ranges of $+/- 1.0\, m_h.r.\,\omega^2.a$; because the adjacent ranges of the specified offset angles and magnitudes of the counterweights are also producing

Split-Engine for Motor-Vehicles.

advantageous results within the scope of the present invention.

Also is claimed a double balancing function for the partial balance shafts, each by itself, and both partial balance shafts together. The double balancing function relates to balancing of the inertia forces, which is accomplished by the counterweight fastened to the middle portion of the partial balance shafts, and relates at the same time to balancing of the inertia couples, which is accomplished by the additional counterweight-pairs, fastened to the ends of the same partial balance shafts. The double balancing function is made possible by the two types of counterweights fastened to the same balance shaft.

As regards balancing of the inertia forces and inertia couples in genral, there remain unbalanced, when only the primary engine is working:

o   inertia couples of primary order round about the longitudinal engine axis, caused by the eccentric position of the partial balance shaft;

o   inertia couples of secondary order, round about the transversal engine axis.

Both inertia couples are of less importance, and they are producing only small oscillations of the engine block, because:

o   the magnitude of the reciprocating engine masses of the primary engine is small in proportion to the mass of the complete engine, and

o   the primary engine, when working as a single engine, is predominantly operating with moderate revolutions only; e.g. during a motor-queuing slowly moving along a highway.

In contrary to it, the split-engine operates with high revolutions predominantly as a complete engine; and then are well balanced the inertia forces and the inertia couples of primary and secondary order.

The 6-cylinder in-line split-engine according to FIG. 18 H second version, and FIG. 26, can as an alternative embodiment also be designed as a 3 + 3 = 6-cylinder in-line split-engine FIG. 18 H third version, and FIG. 29. This split-engine has its origin in a conventional 6-cylinder in-line engine, which is halved into two parts, and of which one part with additional elements forms the primary engine 1, and the second part with additional elements forms the secondary engine 2. The original crank succession of the crankshaft: $I + VI - 120° - II + V - 120° - III + IV - 120° - \ldots$ is maintained, and after halving of the crankshaft, the new partial crankshaft 3 of the primary engine 1 obtains the original cranks: IV; V; and VI, with

Split-Engine for Motor-Vehicles.

120° offset angles, and the new partial crankshaft 4 of the secondary engine 2 obtains the original cranks I; II; and III, also with 120° offset angles. Between the two partial crankshafts is installed the simpler embodiment of the semi-automatic clutch 50, FIG. 6, which, as in the specified other embodiments of the split-engine, periodically clutches-in and separates the two partial crankshafts. The 3 + 3 = 6-cylinder split-engine get also a split balance shaft 93; 94, of primary order, counterrotating to the partial crankshafts; of which the primary engine 1 includes and drives only one partial balance shaft 93, and the secondary engine 2 includes and drives also only one partial balance shaft 94. The split balance shaft is not required when the complete engine is operating, – but the partial balance shaft 93 is necessary for balancing of the inertia couples of primary order generated by the reciprocating masses of the primary engine, when the primary engine is singly operating.

For balancing of these inertia couples are used counterweights 120; 121; 124; and 125, fastened to the front and rear ends of the partial crankshaft 3 and of the partial balance shaft 93 of the primary engine 1; but also counterweights 122; 123; 126; and 127, fastened to the front and rear ends of the partial crankshaft 4 and of the partial balance shaft 94 of the secondary engine 2, FIG. 29.

The specified counterweights are co-operating in pairs, and have at each partial crankshaft and at each partial balance shaft offset angles of 180°. They are so oriented that when the counterweights at the front ends of the partial crankshafts and of the partial balance shafts, that is 121 and 125, or 123 and 127 are directed parallely downwards, the counterweights at the rear ends of the same partial crankshafts and of the same partial balance shafts, that is 120 and 124, or 122 and 126, are directed parallely upwards. Additionally the counterweights of the partial crankshafts 3 and 4 have offset angles of 150° to the adjacent cranks, that is: counterweight 120 to crank VI; counterweight 121 to crank IV; counterweight 122 to crank III; and counterweight 123 to crank I, FIG. 29; while for the offset angles of the counterweights to the cranks are also claimed offset angle ranges of +/- 60°, because counterweights positioned inside of these offset angle ranges are also producing advantageous results within the scope of the present invention.

The counterweights have such magnitudes that they are producing counter inertia couples of primary order of $0.866 \, m_h \cdot r \cdot \omega^2 \cdot a$; at each of the partial crankshafts, and at each of the partial balance shafts, which result in maximal amounts of the produced counter

– 31 –

inertia couples of primary order of 1.732 $m_h.r.\omega^2.a$; for each of said partial engines; and for which are also claimed inertia couple-ranges of +/- 1.0 $m_h.r.\omega^2.a$; because counter inertia couples inside of these ranges are also producing advantageous results within the scope of the present invention.

During clutched-in condition of the partial crankshafts 3 and 4, and after synchronization of their crank-positions, the counter inertia couples produced by the counterweights fastened to the partial crankshafts and to the partial balance shafts, which during this condition are also synchronously rotating, are reciprocally annuled, so that the 3 + 3 = 6-cylinder split-engine as a complete engine is running as quiet as a conventional 6-cylinder in-line engine, with well balanced inertia forces and inertia couples of primary and secondary order, — but of which the primary engine, when working singly, is also running as quiet as the complete split-engine, with well balanced inertia forces and inertia couples of primary and secondary order.

The clutched-in and synchronized partial crankshafts, as a complete crankshaft, have a crankshaft front view silhouette, FIG. 29, corresponding with the original crankshaft of the 6-cylinder in-line engine, and the preferred firing order corresponds also with the firing order and firing distances of the conventional 6-cylinder in-line engine, as: $I - 120° - V - 120° - III - 120° - VI - 120° - II - 120° - IV - 120° -...$, and which is the first of the two clutched-in conditions of said split-engine. However, after separation of the two partial engines and the two partial crankshafts 3 and 4, and their repeated clutching-in with one complete relative revolution, and after synchronization of the crank positions of the two partial crankshafts, change the firing order and the firing distances of the complete split-engine to: $I + VI - 240° - III + IV - 240° - II + V - 240° -...$, which is the second clutched-in condition of said split-engine; — but during which the inertia forces and inertia couples of primary and secondary order are, as before, also well balanced. And this second clutched-in condition can change into the above specified first clutched-in condition at each next back-movement of the accelerator pedal, without any further help of the driver.

On the basis of the split-engine principle there can be established a whole engine family, consisting of in-line engines, as FIG. 17E; FIG. 17F; FIG. 18H in three versions; FIG. 19K; FIG. 20N; e.t.c; of V-engines, as FIG. 17G; FIG. 18J; FIG. 19L; FIG. 19M; FIG. 20P; FIG. 21; e.t.c.; and of other engine types.

Herein comprises the primary engine, within small in-line units, a single engine cylinder only, e.g. FIG. 17E; within middle units, two engine cylinders, FIG. 17F; FIG. 17G; FIG. 18H; FIG. 18J; and FIG. 19M, and within larger units, two and more engine cylinders.

The small engine according to FIG. 17E is a 1 + 2 = 3-cylinder in-line split-engine, having a balance shaft of primary order for the complete engine, but driven by the secondary engine only. The one cylinder primary engine has no balance shaft. Accordingly the complete engine is well balanced; – but the primary engine, when singly operating, has a behaviour as a conventional one cylinder engine.

The primary engine with two cylinders would be advantageous for road vehicles, especially in warm countries, because the primary engine has to drive nearly all vehicle auxiliaries 46, which together with the air conditioning compressor can result in a required power of 10 KW., or even more.

The small embodiments of the split-engines will be formed by splitting of conventional engines, while larger embodiments will be established by assembling of two conventional engines; and this with and without the change of the original firing orders and firing distances, and with and without the addition of balance shafts.

The smallest embodiment of an in-line split-engine comprises two engine cylinders, of which one cylinder is used for the primary engine, and one cylinder for the secondary engine. The smallest V-split-engine comprises four engine cylinders, of which each partial engine has two cylinders in a V-pair arrangement, FIG. 17G. – In contrast to it, have large split-engines an unlimited number of engine cylinders. Thus the split-engine of FIG. 21; a 6V + 6V = 12V-cylinder engine, is not the largest embodiment, but there can be e.g. also realized split-engines having 6V + 12V = 18V-cylinders, e.t.c., e.g. for locomotives, ships and other vehicle drives, and even larger units. Also split-engine specific combinations may be newly introduced, e.g. according to FIG. 20N; or FIG. 20P; e.t.c.

Within the V-split-engines, having two in V-shape arranged cylinder rows which drive a common crankshaft, the preferred V-angle between the two cylinder rows is 90$^\circ$. Also for the V-split-engines can be utilized the simpler and shorter embodiment of the semi-automatic clutch 50, FIG. 6; and the crankshafts have common cranks and common crank-pins for each pair of V-cylinders positioned in both cylinder rows. Such a V-engine arrangement has the inherent balancing potency for inertia forces and inertia couples of primary order; – while there remain unbalanced inertia forces and

– 33 –

inertia couples of secondary order. Thus, a balance shaft of primary order is not utilizable, and for the inertia couples of secondary order soft engine mountings would be of advantage. However, the 8V-cylinder split-engine has again the inherent balancing potency for inertia couples of secondary order, which can be utilized in 4V + 4V = 8V-cylinder split-engines, and in 2V + 6V = 8V-cylinder split-engines, according to FIG. 19L and FIG. 19M; and these split-engines are well balanced.

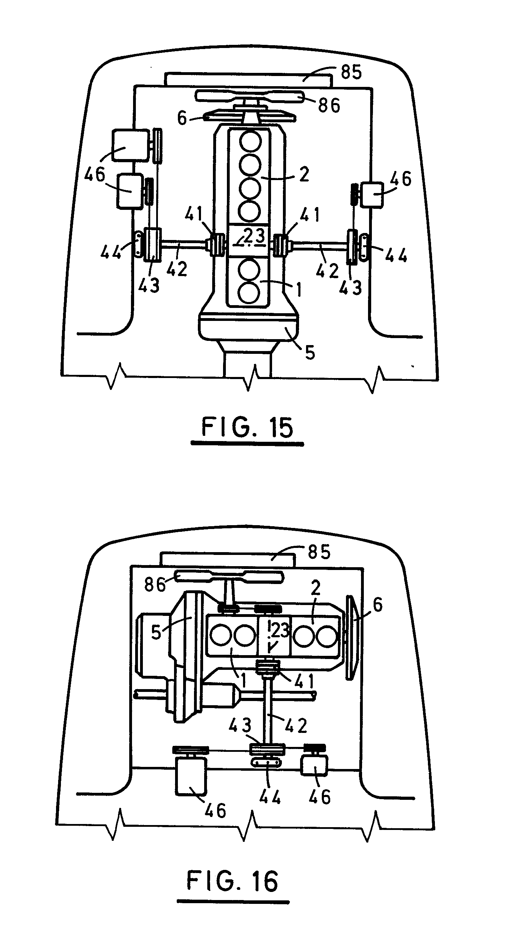

The split-engine may be installed into the vehicle longitudinally, FIG. 15, with e.g. a rear axle drive, or transversally, FIG. 16, with e.g. a front axle drive. Thus a longitudinally installed split-engine has positioned the conventional clutch 8 and the transmission, or the conventional automatic transmission, behind the primary engine; while a transversally installed split-engine has positioned the clutch 8 and transmission, or automatic transmission, either beside or behind the primary engine, depending upon the length of the split-engine or width of the vehicle.

The partial camshafts, the induction manifolds, and the cylinder combustion chambers of the primary engine and of the secondary engine are differently designed. Herein is the partial camshaft 9, or are the partial camshafts of the primary engine 1, constructed for a medium travelling speed and for low engine idling revolutions, and have e.g. small cam-overlappings; and is the partial camshaft 10, or are the partial camshafts of the secondary engine 2, optimized for a high travelling speed, and have e.g. large cam-overlappings. By these means obtains the split-engine the qualities of an internal combustion engine having a variable timing, without of the complicated and expensive adjusting mechanism, being conventionally in use.

Furthermore, the cylinder induction manifold of the primary engine is designed with turbulence promoting spiral-ducts, which during partial engine load favors the combustion of weak air-fuel mixtures; while the cylinder induction manifold of the secondary engine is designed with cylinder charge increasing shapes, which e.g. are straight ducts, to favor a high power during high engine revolutions.

In addition, the combustion chambers and pistons of the primary engine preferably have squeezing zones, which increase the turbulence in the combustion chambers; while the combustion chambers of the secondary engine are preferably designed without squeezing zones.

Moreover are provided different numbers of induction and exhaust valves in each cylinder of the partial engines of the split-engine. And the primary engine has e.g. in each cylinder two valves, while the scondary engine has e.g. in each cylinder more than two valves. But the primary engine can also be equiped with more than two valves in each cylinder. This difference of valves favors especially a high power of the secondary engine.

Finally, the primary engine and the secondary engine have differently designed spark-advance curves or ignition maps, when three dimensional (3 D) ignition systems are used, producing substantially larger pre-ignition spark angles for the secondary engine than for the primary engine.

The roller-chain drives 11 and 12, of the primary and secondary engine, FIG. 1; FIG. 2; FIG. 6; and FIG. 14, are arranged in the division area of the two partial engines 1 and 2, and especially on both sides and near to the semi-automatic clutch 50. The roller-chain drive 11 of the primary engine 1 is placed between the engine cross-shaft 23 and the front crankshaft main bearing 106, and the helical gear 24 of the cross-shaft dips into the plane of the chain drive 11; while the roller-chain drive 12 of the secondary engine 2 is placed between the rear crankshaft main bearing 103 and the (disc-shaped) cylinder-body 55 of the semi-automatic clutch 50, FIG. 6; and FIG. 14. The chain drives have step-down gears in the cylinder heads of the partial engines, comprising toothed gearing or further roller-chain drives, which are driving the partial camshafts 9 and 10. The roller-chain drives 11 and 12 can also directly drive the partial camshafts 9 and 10, without of additional step-down gears, but this results in larger chain sprocket wheels on the partial camshafts.

Within of the roller-chain drives 11 and 12, the closed chain-loops wrap-around with their outer sides the driving crankshaft sprocket-wheels, and the sprockets of the crankshaft sprocket-wheels are in mesh with the outer sides of the chain-loops; while the closed chain-loops wrap-around with their inner sides the sprocket-wheels of the driven engine auxiliary shafts, and the sprockets of the driven auxiliary shaft sprocket-wheels are in mesh with the inner sides of the chain-loops. By this means each roller-chain drive, which is lying in a single plane only, may simultaneously drive the partial camshafts 9; 10, positioned above the crankshaft, the oil-pumps 13; 14, positioned below the crankshaft, and also the partial balance shaft 93;94, counterrotating to the crankshaft, and positioned laterally to the crankshaft, FIG. 2.

The sprocket-wheels of the oil-pumps 13; 14, of both roller-chain drives 11 and 12, are arranged inside of chain-troughs 97, of which the top edges are reaching above the oil-level in the oil pan of the engine. The chain-troughs are preventing air-bubbles from being drawn into the oil-bath by the roller-chains; to avoid air-bubbles in the pressurized oil.

The majority of the vehicle auxiliaries 46, as alternator, power steering pump, air-conditioning compressor, e.t.c. are driven by the primary engine 1 by means of a special engine cross-shaft 23, which is directly connected with the partial crankshaft 3 by a pair of crossed helical gears 24. The engine cross-shaft penetrates both side walls of the engine block, has bearings in the block-side walls, protrudes from the bearings with short shaft ends, is on the outsides of the engine block elongated with flexible shaft couplings comprising elastomer-rings or with universal joints 41, and lengthening shaft-pieces, which reach to the vehicle body walls. On the shafts are fastened driving pulleys 21; 43, either directly on the engine crosshaft-outsides or on the lengthening shaft-pieces 42, FIG. 2; FIG. 15; and FIG. 16, for driving the vehicle auxiliaries. The lengthening shaft-pieces are supported in support bearings 44, which are cushioned in elastomer-rings, to be flexible for the engine block movements. The cushion casings having two parts, to anable fitting of the drive belts.

For the longitudinal installation of the split-engine into the vehicle, FIG. 15, the support bearings 44 are fastened by means of brackets 45 either to the front axle crossmember, or to the side walls of the vehicle body. For the transversal installation of the split-engine into the vehicle, FIG. 16, the support bearings are fastened either to the transversal walls of the vehicle body, or to cantilevers of the engine block. The vehicle auxiliaries 46 are in both installation cases of the split-engine fastened to the body of the vehicle, which enables simple feeding lines (cables and hoses) to the auxiliaries, and which results in weight savings, by omission of the hitherto necessary very strong and heavy brackets for the auxiliaries, fastened to the vibrating engine block. For the longitudinal installation of the split-engine, FIG. 15, the auxiliaries are fastened to the side walls of the engine compartment; and for the transversal installation of the split-engine, FIG. 16, the auxiliaries are predominantly fastened to the rear wall of the engine com-partment.

Split-Engine for Motor-Vehicles.

The cooling system of the split-engine, FIG. 28, is also arranged as a split-cooling system, and comprises, for the primary engine 1 and for the secondary engine 2, separate cylinder cooling jackets 89 and 90, separate water-pumps 21 and 22, separate double-acting two-valve thermostats 80 and 83, separate by-pass lines, a common cooler 85, a common deaeration container 87, and a heater for the vehicle interior. With these components the cooling system has a connection scheme, wherein first of all the started primary engine 1 will be rapidly warmed-up, being short-circuited in the conventional way with its cooling jacket 89, double acting two valve thermostat 80, and a by-pass line 81. As soon as the warming-up operation is completed, the thermostat 80 closes with its one valve the by-pass line 81, and opens simultaneously its second valve, by which the -now- warm water stream, coming from the primary engine 1, is precedently conducted into the cylinder cooling jacket 90 of the not working secondary engine 2, in order also to warm-up this engine, and is conducted into the heater 82 for the vehicle interior. The warming-up operation of the secondary engine 2, which is followed by a warm-holding of this engine, is controlled by the thermostat 83. The water now flows through the cylinder cooling jacket 90 of the secondary engine 2 from its upper side to its bottom side, arrow "a" in FIG. 28, and one opened valve of the thermostat 83 allows a direct backflow of the water to the water pump 21 of the primary engine 1. As soon as the (still) not working secondary engine 2 has completed its warming-up operation, the thermostat 83 stops with its one closing valve this flow, and releases with its simultaneously opening second valve the water circulation through the cooler 85 of the vehicle. Into the suction duct of the water pump 22 of the secondary engine 2 is installed an electromagnetically operated backflow-preventing valve 84, which is electrically connected with the ignition circuit 32 of the secondary engine, and which, after stopping of the water stream by the thermostat 83, is preventing an overheating of the primary and secondary engine; that could occur, by a water back-flow through the stationary water pump 22 of the secondary engine. The above mentioned warm-holding of the secondary engine, which follows after the warming-up operation, will be continued as long as the secondary engine is not working, to keep it in the warm condition for a start at any time.

The electromagnetically operated backflow-preventing valve 84 opens the suction duct of the water pump 22 as soon as the secondary engine is started. Thereafter flows the water through the cylinder cooling jacket 90 of the secondary engine 2 from its bottom side to its upper side, arrow "b" in FIG. 28. Additionally the suction duct of the water pump 22, together with the two valve thermostat 83, forms an own warming—up by—pass line of the secondary engine 2, which automatically is set in operation, when the not yet warmed—up secondary engine is suddenly started.

The housing of the two valve thermostat 83 is attached to the lower area of one side wall of the cylinder cooling jacket 90 of the secondary engine 2, and the thermal responding element of the thermostat 83 is projecting into the interior of the cooling jacket 90. The water sectional areas of the valves of the thermostat 83 have substantially the double size of the water sectional areas of the valves of the thermostat 80.

The split—engine in conformity with the present invention is provided for reciprocating piston internal combustion engines, which are operating according to the gasoline Otto—principle or according to the Diesel—principle, and it is provided as a four—cycle angine and as a two—cycle engine. For two—cycle engines are utilized the same combinations of primary and secondary engines as for four—cycle engines, as shown in FIG. 17E through FIG. 21, and are also utilized the same divided crankshafts and split balance shafts, as shown in FIG. 25; FIG. 26; FIG. 27; and FIG. 29; wherewith also the balancing of the inertia forces and inertia couples are identical with the balancing of those forces and couples of four—cycle engines. However, for two—cycle engines will only be used the simpler embodiment of the semi—automatic clutch 50 according to FIG. 6, which after each complete relative revolution of the partial crankshafts 3 and 4 is clutching—in and connecting the two patial crankshafts, and is synchronizing the crank positions of the two partial crankshafts.

Furthermore, the split—engine principle may be utilized in connection with the Wankel—rotary piston internal combustion engine, wherewith the primary engine and the secondary engine comprise at least one rotary piston with the corresponding housing unit.

But the split—engine may also be used in mixed embodiments, that is: it may consist of a gasoline partial engine and of a Diesel partial engine, or it may consist of a gasoline partial engine and of a alcohol fuel partial engine, or it may consist of a reciprocating piston partial engine and of a rotary piston partial engine.

The split-engine in conformity with the present invention may be combined with all known internal combustion engine design-variants, as e.g. with engines having 4 valves in each cylinder, with engines having fuel injection systems, with engines having turbo supercharging, e.t.c.; and the split-engine may also be combined with all known devices protecting against noxious emissions, including the cytalyzers. In these combinations the split-engine procedure enables to reduce the amount of the exhausted engine gases nearly to one third, which is exactly determined by the ratio of the piston displacements and the ratio of the idling r.p.m. between the primary engine and the complete split-engine, and with that also to reduce nearly to one third the amount of the exhausted noxious emissions remaining from the known emission protecting devices, on cross-roads in the towns and during highway motor-queuings; which results in a multiplicative reduction of the noxious emissions, and which additionally saves fuel.

By these means the split-engine is in a position to make an essential contribution to the purification of the air in towns and elsewhere, and to the reduction of fuel consumption.

P.T.O.

Split-Engine for Motor-Vehicles.  0184685

## CLAIMS

What we claim is:

1.  In an internal combustion engine for the propulsion of motor-vehicles having an engine block with a plurality of cylinders, a crankshaft, a piston and a connecting rod in each cylinder, an oil-supply system, an oil pan, a cylinder head, two or more valves in each cylinder, a valve train, a camshaft, a camshaft drive, an ignition system, a cooling system, an induction system, an exhaust system, an auxiliary-drive system, e.t.c.,

the improvement comprising:

a splitting of the internal combustion engine into two self-contained partial engines (1 and 2)(FIG. 1; FIG. 15 through FIG. 21; FIG. 25; FIG. 26; and FIG. 29), wherein both said partial engines form together the complete split-engine for motor-vehicles; each of said partial engines having the capability of being separately operated, and the capability of delivering separately power; one of said partial engines, named primary engine (1), being connected by its output shaft (79) with the vehicle drive system, and being utilized for the propulsion of the vehicle as conventional engines; the other of said partial engines, named secondary engine (2), being periodically and automatically started and clutched-in to the vehicle drive system, when an increased power is required, e.g. for accelerations of the vehicle, for high-speed travellings, e.t.c., and said secondary engine being automatically separated from the vehicle drive system and completely stopped, when a reduced power is sufficient, e.g. in front of red traffic-lights, for motor-queuings, for hill-descends, e.t.c.; and said split-engine having the capability of being combined with all known engine design-variants, as e.g. with engines having 4 valves in each cylinder, with engines having fuel injection systems, with engines having turbo-supercharging, e.t.c., and said split-engine having the capability of being combined with all known devices protecting against noxious emissions, including the catalyzers;

a multiplicative reduction of the noxious exhaust emissions due to said periodical startings and stoppings of said secondary engine: said startings and stoppings reducing the amount of the exhausted engine gases nearly to one third, and being exactly

(Claim 1, continued)

determined by the ratio of the piston displacements and the ratio of the idling r.p.m. between said primary engine (1) and said complete split-engine (1 plus 2), and correspondingly reducing nearly to one third the amount of the exhausted noxious emissions remaining from the known emission protecting devices, thus realizing said multiplicative reduction of noxious emissions, that have a beneficial environmental influence e.g. on cross-roads in the towns, and e.g. during motorqueuings both in the towns and on highways; and said periodical startings and stoppings of said secondary engine (2) correspondingly reducing the fuel consumption of the motorvehicle;

means for materializing of the aforesaid features as follows:

(a)    the crankshaft of said complete split-engine being divided into two partial crankshafts (3 and 4), for said primary engine (1) the partial crankshaft (3), and for said secondary engine (2) the partial crankshaft (4); and for in-line engines the crankshaft of said complete split-engine (FIG. 25 through FIG. 27; and FIG. 29) being designed with its crank positions and various counterweights (91; 92; 104; 110; 112; 114; 116; 120 through 123) as a dynamically optimal crankshaft, balancing the inertia forces and the inertia couples of primary and secondary order generated by the reciprocating engine masses of said complete split-engine, and said crankshaft being at the same time so designed and divided that also said partial crankshafts and especially said partial crankshaft (3) of said primary engine (1) is balancing the inertia forces of primary and secondary order, and the inertia couples of primary order generated by the reciprocating engine masses, and both said partial crankshafts (3; 4) are balancing by means of further counterweights the inertia forces and inertia couples generated by the rotating engine masses of the partial engines;

and said complete split-engine additionally having a splitbalance shaft of primary order, comprising two partial balance shafts (93 and 94) with various counterweights (101; 102; 105; 111; 113; 115; 117; 124 through 127), which closely cooperate with said partial crankshafts (3; 4) in balancing of the inertia forces and the inertia couples

- 41 -

(Claim 1, continued)

generated by the reciprocating engine masses; while the partial crankshafts for V—engines having an inherent balancing potency for inertia forces and inertia couples of primary order generated by the reciprocating engine masses, by a preferred engine cylinder V—angle of 90°, a common crank and a common crank pin for each pair of V—cylinders, and an adequate set of counterweights; and the inertia forces and inertia couples of secondary order generated by the reciprocating engine masses being balances by the complete 8 V—cylinder split—engine;

(b) a semi—automatic clutch (50)(FIG. 6 through FIG. 14; FIG. 25; FIG. 26; and FIG. 29) being installed between said primary and said secondary engine (1 and 2), and especially between said partial crankshaft (3) of the primary engine and said partial crankshaft (4) of the secondary engine, said semi—automatic clutch executing said automatical clutching—in and said automatical separation of said secondary engine (2), whereof said clutching—in being carried out with predestinated relative crank positions between the two partial crankshafts (3 and 4), which is taking place after each complete relative revolution between the two partial crankshafts and the two clutch halves, when utilizing a simpler embodiment of said semi—automatic clutch (FIG. 6); said simpler semi—automatic clutch comprising a friction clutch (51/52; 53; 54) and a ratchet mechanism (51/52; 60; 61; 62), both connected in parallel, and a torsional vibration damper (71), connected in series with said friction clutch and said ratchet mechanism; said semi—automatic clutch having a so named Two—Directional—Function, characterized by two rotative slipping and working directions between the two clutch halves, of which one slipping direction, especially of said friction clutch, and relative rotation direction between the two said partial crankshafts being used for the cranking—up and starting operation of said secondary engine (2), utilizing said primary engine (1) as the starting motor; — and the second and opposite slipping direction of the fully engaged friction clutch, and relative rotation direction between the two said partial crankshafts being used for an automatical synchronizing operation of the relative crank positions of the two said partial crankshafts, which

(Claim 1, continued)

is accomplished by only one engagement position of said ratchet mechanism after each complete relative revolution between the two semi-automatic clutch-halves, and which again results in a dynamically optimal complete crankshaft of said complete split-engine; wherein said slipping of said fully engaged friction clutch during said automatical synchronizing operation being enabled by an under-dimensioning of said friction clutch for the power torque of the working secondary engine, so that the clutch slips when the power torque is applied, and said slipping being continued until the pawls (60) of said ratchet mechanism are dropping into their tooth-spaces in the ratchet wheel (51/ 52) and are taking over the transfer of the power torque of the working secondary engine, which finishes said automaticalsynchronizing operation, and which again enables a balancing of the inertia forces and inertia couples of primary and secondary order of said complete split-engine (FIG. 25; FIG. 26; and FIG. 29);

(c)     said semi-automatic clutch (50) being activated by pressurized oil, taken from the oil-supply system (17) of the working primary engine (1)(FIG. 1), and the flowing-to and flowing-off of the pressurized oil being controlled by an electromagnetically operated pressure oil-switch (25), having an electrical connection with a signal transmitter (34) installed on the accelerator pedal (28); said pressure oil-switch and said signal transmitter having only on/off-functions, and said signal transmitter is in the same sense also switching on/off the ignition of the secondary engine; wherewith said clutching-in and starting as well as said separating and stopping of said secondary engine (2) is accomplished without any special help of the driver;

(d)     said clutching-in of said secondary engine (2) being especially carried out for accelerations of the vehicle, for high-speed travellings, for hill-climbings, and for trailer towings; - and said separating and stopping of said secondary engine being especially carried out for low-speed travellings as e.g. for motor-queuings on highways and in the towns, for short vehicle stoppings, as e.g. in front of traffic-lights, and for hill-descends;

Split–Engine for Motor–Vehicles.

(Claim 1, continued)

(e) a special hand switch (36)(FIG. 1) being installed on the dash–board of the vehicle, enabling the driver permanently to exclude said clutching–in of said secondary engine (2), for e.g. highway motor–queuings, thereupon said primary engine (1) is singly taking over the complete propulsion of the vehicle;

(f) said partial engines (1 and 2)(FIG. 1; FIG. 2; and FIG. 28) having, additionally to said own partial crankshafts (3; 4), also own flywheels (5; 6), own partial camshafts (9; 10), own roller–chain drives (11; 12), to the in each case own camshafts and valve trains, oil pumps, and said partial balance shafts (93; 94), own oil–supply systems (17; 18) with oil–pumps (13; 14), own oil–filters (15; 16), own ignition systems (19; 20), own cylinder cooling jackets (89; 90), own water pumps (21; 22), own thermostats (80; 83), own engine blocks, having a flange connection (78) between the block of said primary engine (1) and said secondary engine (2), – but the two said partial engines having also the suitability of being accommodated in a common one–piece engine block, and other own engine parts;

(g) the two said primary and secondary engines (1 and 2) (FIG. 1; FIG. 15 through FIG. 21) being positioned one after the other in the engine block, said primary engine (1) for a longitudinal installation in the vehicle (FIG. 15) in the rear position, having a direct output shaft (79) to the gear box of the vehicle, and said secondary engine (2) in the front position, and on the output–free end of the engine block;

(h) the majority of the vehicle auxiliaries (46), as alternator, power steering pump, air conditioning compressor, e.t.c., being driven by said primary engine (1) by means of a special engine cross–shaft (23)(FIG. 1; FIG. 2; FIG. 15; and FIG. 16), having a direct connection with said partial crankshaft (3) by a pair of crossed helical gears (24); wherein said engine cross–shaft penetrates both side walls of said engine block, has bearings in the block–side walls, protrudes from said bearings with short shaft–ends, and is on the block–outsides elongated with lengthening

(Claim 1, continued)

shaft—pieces (42), on which are fastened driving pulleys (21; 43) some on the engine cross—shaft ends, and some on said lengthening shaft—pieces (FIG. 2; FIG. 15; and FIG. 16); and the driven vehicle auxiliaries (46) being directly fastened to the vehicle body (FIG. 15 and FIG. 16);

(j)    the cooling—system (FIG. 28) of said split—engine being arranged as a split—cooling system, and having a connection scheme wherein first of all the started primary engine (1) will be rapidly warmed—up; after that the warm water stream, coming from said primary engine, precedently warms—up the secondary engine (2) and holds it in the warmed—up condition, even if said secondary engine is not working; and only after that the warm water stream is routed through the cooler (85) of the vehicle;

(k)    the said split—engine being related to internal combustion engines operating in accordance with the Otto—gasoline engine process and with the Diesel—engine process, and being provided for reciprocating piston engines and for Wankel—rotary piston engines; when for rotary piston engines, the smallest engine unit comprises one rotary piston and the corresponding housing—unit for the primary engine, and one rotary piston and the corresponding housing—unit for the secondary engine; and said split—engine having also the capability of being constructed as a mixed engine: comprising a gasoline partial engine and a Diesel partial engine; or comprising a gasoline partial (e.g. primary) engine and an alcohol fuel partial (e.g. secondary) engine; or comprising a reciprocating piston partial engine and a rotary piston partial engine; and said split—engine being provided for all types of motor—vehicles, and particularly for land—vehicles, as road—vehicles, rail—vehicles, e.t.c., for water—vehicles, and for air—vehicles.

2.    The internal combustion split—engine of claim 1 wherein said accelerator pedal (28) is actuating the throttle flaps of the carburetors or the gasoline—or diesel oil injection systems in accordance with special curves (FIG. 3), in which: said primary engine (1) is preferentially rising in the first instance, thereupon it is weakening in the rise, and in the end it is gradually joining with the progressively rising curve of said secondary engine (2);

(Claim 2, continued)

the clutching-in point of said secondary engine for e.g. high-speed travelling, and the separation point for e.g. low travelling speed are adjustable, and the distance (29) between said accelerator pedal (28) and said signal transmitter (34), which is decisive for said clutching-in point, is changeable by an adjustment screw (30);

said separation of said secondary engine (2) after the back-movement of said accelerator pedal (28), is delayed for a short time period by a delay valve (35) attached to said pressure oil switch (25) and by a delay switch (77) in the ignition system of said secondary engine (2), in order to avoid a stopping of said secondary engine during gear changes of hand shifted gears;

said pressure oil-switch (25) and especially its hydraulic part is accommodated inside of the engine block, e.g. in the transverse block-wall of the rear crankshaft main bearing (103) of said secondary engine (2)(FIG. 6; and FIG. 14), whereas the electromagnetic part of said pressure oil switch (25) is positioned on the outside of said engine block;

the pressurized oil flow from said pressure oil switch (25) is routed by a pressurized oil-line (76) to the rear crankshaft main bearing (103) of said secondary engine (2), and further through pressurized oil ways (58), drilled in said partial crankshaft (4), into said semi-automatic clutch (50); and

the pressurized oil coming from said pressure oil switch (25) is also utilized for the lubrication of said rear crankshaft main bearing (103), which is not joined to the oil-supply system (18) of said secondary engine (2).

3. The internal combustion split-engine of claim 1 wherein said friction clutch (FIG. 6; and FIG. 14) of said semi-automatic clutch (50), is an oil-wet disc clutch comprising a hardened friction disc (51/52), and two friction rings, on both sides of said friction disc, one large friction ring (53) and one small friction ring (54), both said friction rings made e.g. of a copper alloy, and having on their plane friction faces narrowly spaced concentric grooves and widely spaced radial grooves;

for engaging of said friction clutch, said large friction ring (54) is axially moved and pressed against said friction disc (51/52), which yields, moving axially in its cylindrical roller bearings (48),

(Claim 3, continued)

until said friction disc comes also in contact with said axially fixed small friction ring (54); said large friction ring (53) has on its other side to the friction face and on its periphery a protruding ring with an inner hollow conical surface, that engages corresponding wedge-shaped cut-outs in several actuating pistons (56), which are radially arranged in a disc-shaped cylinder body (55) of the semi-automatic clutch; and when said pistons (56) are actuated by pressurized oil coming from said pressure oil switch (25), the pistons are moving radially outwardly, and by the wedge-action between said piston cut-outs and said hollow conical surface of the large friction ring, said friction ring (53) get said axial movement, by which said friction clutch will be engaged; said cylinder body (55) and said small friction ring (54) are fixed to said partial crankshaft (4) of said secondary engine (2), and said large friction ring (53) is torsion-proof, but axially movable connected with the same partial crankshaft (4), – while said friction disc (51/52) is driven by said partial crankshaft (3) of said primary engine (1) by means of said torsional vibration damper (71);

said ratchet mechanism (FIG. 6 through FIG. 14) of said semi-automatic clutch (50), has two pawls (60) with counterweights (61), and readjusting springs (63), said pawls are positioned on pivots (62), which are diametrally opposite fastened to said cylinder body (55), and said pawls are engaging said friction disc (51/52), which at the same time is also the ratchet wheel, having two diametrally opposite positioned tooth spaces for said pawls; said pawls (60) are operating on two axially offset tracks (70)(FIG. 8), while said two tooth spaces in said ratchet wheel have lateral side-lands (68 and 69), positioned alternately and preferably only on one outside of said tooth spaces, which also results in an axial offset of the tooth spaces, corresponding with the track offset of the pawls; wherewith each said pawl is sliding over the side-land of the wrong tooth space, and is only able to drop into the right, that is its own, tooth space; by which arrangement said ratchet mechanism has only one engagement position of said pawls (60) after each complete relative revolution of the two clutch halves, and by which also said semi-automatic clutch (50) has only one engagement position, and one clutching-in position of said two partial crankshafts ( 3 and 4 ) after each complete relative revolution of them;

during separation of said two partial crankshafts, said pawls (60) will be lifted off from said friction disc (51/52), for which a

(Claim 3, continued)

lifting-off lever (64) with an elastic tooth is provided for each said pawl (60); said lifting-off lever is fastened to a short shaft (65), which is borne in said cylinder body (55), and which has a small balance beam placed on the other side of said cylinder body; and said balance beam is on its one end in contact with a piston (66) operated by pressurized oil, and on its other end in contact with a compression readjusting spring (67), both being accommodated in said cylinder body (55), wherein said readjusting spring (67) is so strong that it overpowers said readjusting spring (63) of said pawl (60), which results in lifting-off of said pawl; – but during activation of said semi-automatic clutch (50) by pressurized oil, the oil enters through an intermediate bore (FIG. 7) also into the cylinder of said balance beam piston (66), which overpowers said readjusting spring (67), and said pawl(s)(60) will be lowered onto said friction disc (51/52);

in addition to the above claimed simpler embodiment of said semi-automatic clutch (50) according to FIG. 6, there is also provided and claimed an alternative embodiment of a semi-automatic clutch (50) (FIG. 14), characterized by a changed engagement position of said pawls (60), which is taking place only after two complete relative revolutions of the two clutch halves, and which is clutching-in said two partial crankshafts (3 and 4) after their two complete relative revolutions; this being accomplished by an additional planetary gear set (73; 74; 75)( FIG. 14) integrated into said semi-automatic clutch, and having a gear ratio of 1/2 between said partial crankshaft (3) and said friction disc (52); wherein the central sun-gear (74) of said gear set is torsion-proof fastened to said partial crankshaft (4) of said secondary engine (2), the at least two satellite gears (73) of said gear set are rotatable connected with said friction disc (52), which at the same time is also the carrier for the satellite gears, and the outer hollow gear (75) of said planetary gear set is torsion-proof connected with said partial crankshaft (3) of said primary engine (1) by means of said torsional vibration damper (71); and

for said separation of said secondary engine (2) from said primary engine (1)(FIG. 13), the swiched-off pressure oil switch (25) relieves the oil pressure in said semi-automatic clutch (50) and especially in said cylinders (66 and 72)(FIG! 7), which disengages said friction clutch, and which lifts-off said pawls (60) from said friction disc (51/52).

4. The internal combustion split-engine of claim 1 wherein said engine cross-shaft (23)(FIG. 1; FIG. 2; FIG. 15; and FIG. 16) has flexible shaft couplings with elastomer-rings or with universal joints (41) on both sides of the engine block; said lengthening shaft-pieces (42) are fitted to said flexible shaft couplings and elongate said engine cross-shaft up to the walls of the vehicle body, where are provided support bearings (44), cushioned in elastomer-rings (FIG. 2), while the casings of said elastomer-rings consist of two parts, to enable fitting of the drive belts; for the longitudinal installation of said split-engine in the vehicle (FIG. 15), said support bearings (44) are fastened by means of brackets (45) to the front axle crossmember, and alternatively also to the side walls of the vehicle body, while for the transversal installation of said split-engine in the vehicle (FIG. 16), said support bearings (44) are fastened to the transversal walls of the vehicle body, and alternatively also to cantilevers of the engine block.

5. The internal combustion split-engine of claim 1 wherein said partial camshafts, the induction manifolds, and the cylinder combustion chambers of said primary engine (1) and of said secondary engine (2) have different designs;
said partial camshaft (9), or said partial camshafts (when more than one are used), of said primary engine (1) is/are constructed for a medium travelling speed and for low engine idling revolutions, and have e.g. small cam-overlappings, e.t.c., and said partial camshaft (10), or said partial camshafts (when more than one are used), of said secondary engine (2) is/are optimized for a high travelling speed, and have e.g. large cam-overlappings, e.t.c.;
the cylinder induction manifold of said primary engine (1) is designed with turbulence-promoting shapes, which e.g. are spiral ducts, and the cylinder induction manifolds of said secondary engine (2) is designed with cylinder-charge increasing shapes, which e.g. are straight ducts;
additionally, said combustion chambers and pistons of said primary engine (1) are preferably designed with squeezing zones, to increase the turbulence in the combustion chambers, and said combustion chambers of said secondary engine (2) are preferably designed without squeezing zones;
also are provided different numbers of induction valves and exhaust valves in each cylinder of said primary engine (1) and of said secondary engine ( 2), according to which         each cylinder of said

(Claim 5, continued)

primary engine (1) has e.g. two valves, while each cylinder of said secondary engine (2) has e.g. more than two valves; but also each cylinder of said primary engine can have more than two valves; and

said primary engine (1) and said secondary engine (2) have differently designed spark-advance curves, and, when three dimensional (3D) ignition systems are used, differently designed ignition maps, producing substantially larger pre-ignition spark-angles for said secondary engine (2) than for said primary engine (1).

6.    The internal combustion split-engine of claim 1 wherein for said balancing of the inertia forces and inertia couples generated by the reciprocating engine masses within a $2 + 2 = 4$-cylinder in-line split-engine (FIG. 25) is utilized an angine crankshaft with crank-groups, which consist of two cranks having a relative offset angle of $90^{\circ}$ (FIG. 22; and FIG. 23), wherewith said partial crankshaft (3) of said primary engine (1) comprises one unit of said crank-groups, and said partial crankshaft (4) of said secondary engine (2) comprises also one unit of said crank-groups (FIG. 25); said split-engine additionally has a split-balance shaft of primary order (93; 94), which is counterrotating to said partial crankshafts, and of which said primary engine (1) includes and drives only one partial balance shaft (93), and said secondary engine (2) includes and drives also only one partial balance shaft (94); the counterweights (91; 92) fastened to said partial crankshafts, and utilized for balancing of the inertia forces and inertia couples generated by the reciprocating engine masses, have inside of each said crank-group offset angles of $135^{\circ}$ to the two said cranks (FIG. 23; and FIG. 25), which means that inside of a crank-group said counterweights are placed in the bisecting plane of the angle between the two crank planes, but positioned on the other side of the crankshaft rotational axis; while each of said partial balance shafts has one counterweight (101; 102) fastened to the middle portion of each partial balance shaft; for balancing of said inertia forces generated by the reciprocating engine masses inside of each said crank-group, the in pairs cooperating counterweights fastened to said crank-group and to said partial balance shaft (that is: 91 and 101; or 92 and 102) are equally oriented (FIG. 27), when the two pistons (107) of each said crank-group (which here are also the two pistons of one partial engine) have equal distances, that is for each said piston $45^{\circ}$ revolution of the crankshaft, to their top dead center (as shown) or bottom dead center;

(Claim 6, continued)

each co-operating pair of counterweights (91 and 101; or 92 and 102) is rotating side by side in a common plane (which in FIG. 27 is the drawing plane); the magnitudes of said counterweights inside of each said crank-group (that is of 91 and 101; or 92 and 102) are resulting from the required counteracting force-magnitudes of primary order, which for each of said partial crankshaft  and for each of said partial balance shaft   is amounting to $0.7071\, m_h \cdot r \cdot \omega^2$; and with said counteracting forces are also claimed adjacent force-ranges of $+/-\, 1.0\, m_h \cdot r \cdot \omega^2$; the two said partial balance shafts (93; and 94) are synchronous rotating with each other, together with their counterweights (101 and 102), which have a constant offset angle of $180^o$, when the two said partial crankshafts (3 and 4) are also synchronized with each other, and their two said crank-groups have also a constant offset angle of $180^o$ (FIG. 25); in which condition  the clutched-in partial crankshafts have a cross-shaped front view – silhouette of the complete crankshaft, with the crank succession of: $I - 90^o - II - 90^o - IV - 90^o - III - 90^o - \ldots$; for said $90^o$ crank offset angles inside of each said crank-group are also claimed adjacent offset angle-ranges of $+/-\, 60^o$, that is from $30^o$ up to $150^o$ crank offset, and analogous, for said $135^o$ counterweight offset angles inside of each said crank-group are also claimed adjacent offset angle ranges of $+/-\, 30^o$, that is from $105^o$ up to $165^o$ counterweight offset (FIG. 23);

the inertia forces and the inertia couples generated by the rotating engine masses are balanced by further rotating counterweights (not shown) fastened to said two partial crankshafts;

and at the said split-engine embodiment the exhaust pipes of two adjoining engine cylinders, when they are belonging to one of said crank-groups, may be joined with each other at the exhaust ports of the engine cylinder heads.

7.    The internal combustion split-engine of claim 1 wherein for said balancing of the inertia forces and inertia couples generated by the reciprocating engine masses within a larger $2 + 4 = 6-$cylinder in-line split-engine (FIG. 26) is also utilized an engine crankshaft with crank-groups, which consist of two cranks having a relative offset angle of $90^o$ (FIG. 22 and FIG. 23), wherewith said partial crankshaft (3) of said primary engine (1) comprises one unit of said crank-groups, and said partial crankshaft (4) of said secondary engine (2) comprises two units of said crank-groups, which have a relative offset angle of $120^o$ (FIG. 26); said split-engine addi-

Split-Engine for Motor-Vehicles.

(Claim 7, continued)

tionally has a split balance shaft of primary order (93; 94), which is counterrotating to said partial crankshafts, and of which said primary engine (1) includes and drives only one partial balance shaft (93), and said secondary engine (2) includes and drives also only one partial balance shaft (94); the counterweights (91; 92; 104) fastened to said partial crankshafts, and utilized for balancing of the inertia forces and inertia couples generated by the reciprocating engine masses, have inside of each said crank-group offset angles of $135^{\circ}$ to the two said cranks (FIG. 23 and FIG. 26), which means that inside of a crank-group said counterweights are placed in the bisecting plane of the angle between the two crank planes, but positioned on the other side of the crankshaft rotational axis; while each of said partial balance shafts has for each crank-group one counterweight (101; 102; 105) fastened to the middle portion of each partial balance shaft; for balancing of said inertia forces generated by the reciprocating engine masses inside of each said crank-group, the in pairs cooperating counterweights fastened to said crank-group and to said partial balance shaft (that is: 91 and 101; or 92 and 102; or 104 and 105) are equally oriented (FIG. 27), when the two pistons (107) of each said crank-group have equal distances, that is for each said piston $45^{\circ}$ revolution of the crankshaft, to their top dead center (as shown) or bottom dead center; each co-operating pair of counterweights (91 and 101; or 92 and 102; or 104 and 105) is rotating side by side in a common plane (which in FIG. 27 is the drawing plane); the magnitudes of said counterweights inside of each said crank-group (that is of 91 and 101; or 92 and 102; or 104 and 105) are resulting from the required counteracting force-magnitudes of primary order, which inside of each crank-group for the partial crankshaft and for the partial balance shaft, in each case, is amounting to $0.7071\, m_h \cdot r \cdot \omega^2$; and with said counteracting forces are also claimed adjacent force-ranges of $+/- 1.0\, m_h \cdot r \cdot \omega^2$; the two said partial balance shafts (93 and 94) are synchronous rotating with each other, together with their counterweights (101; 102; and 105) which have constant offset angles of $120^{\circ}$, when the two said partial crankshafts (3 and 4) are also synchronized with each other, and their three said crank groups have also constant offset angles of $120^{\circ}$ (FIG. 26); in which condition the clutched-in partial crankshafts have a front view silhouette of the complete crankshaft with the crank-succession of: $1 - 90^{\circ} - 11 - 30^{\circ} - 111 - 90^{\circ} - 1V - 30^{\circ} - V - 90^{\circ} - V1 - 30^{\circ} - \ldots$; for said $90^{\circ}$ crank offset angle inside of each said crank-group are

(Claim 7, continued)

also claimed adjacent offset angle ranges of +/- 60$^{\circ}$, that is from 30$^{\circ}$ up to 150$^{\circ}$ crank offset, and analogous, for said 135$^{\circ}$ counterweight offset angles inside of each said crank-group are also claimed adjacent offset angle-ranges of +/- 30$^{\circ}$, that is from 105$^{\circ}$ up to 165$^{\circ}$ counterweight offset (FIG. 23) ;

the inertia forces and the inertia couples generated by the rotating engine masses are balanced by further rotating counterweights (not shown) fastened to said two partial crankshafts ;

and at the said split-engine embodiment the exhaust pipes of two adjoining engine cylinders, when they are belonging to one of said crank-groups, may be joined with each other at the exhaust ports of the engine cylinder heads.


8.   The internal combustion split-engine of claim 1 wherein on the basis of said split-engine principle may be established a whole engine family, comprising: in-line engines (as FIG. 17E; FIG. 17F; FIG. 18H, in three versions; FIG. 19K; FIG. 20N; e.t.c.), V-engines (as FIG. 17G; FIG. 18J; FIG. 19L; FIG. 19M; FIG. 20P; FIG. 21; e.t.c.), and other engine types; wherein small embodiments of said split-engine are formed by splitting of conventional engines, and larger embodiments of said split-engine are established by assembling of two conventional engines, which is carried out with and without the change of the original firing orders and firing distances, and with and without the addition of balance shafts; said primary engine (1) comprises: within small in-line split-engines, a single engine cylinder only (e.g. FIG. 17E), within middle split-engines, two engine cylinders (e.g. FIG. 17F; FIG. 17G; FIG. 18H; FIG. 18J; and FIG. 19M), and within larger split-engines, two and more engine cylinders (e.g. FIG. 18H; FIG. 19K; FIG. 19L; e.t.c.); said small engine according to FIG. 17E, is a 1 + 2 = 3-cylinder in-line split-engine, which has a balance shaft of primary order for the complete engine, but which is driven by the secondary engine (2) only; - while the one cylinder primary engine (1) has no balance shaft; the smallest in-line split-engine embodiment comprises two engine cylinders, of which each partial engine has only one cylinder; the smallest V-split-engine comprises four engine cylinders, of which each partial engine has two cylinders in a V-pair arrangement (FIG. 17G); - while at large split-engine embodiments the number of engine cylinders is unlimited; this is also valid for specific split-engine combinations, which may be newly introduced (e.g. FIG. 20N; FIG. 20P; FIG. 21; e.t.c.).

9.   The internal combustion split-engine of claim 1 wherein said complete 4-cylinder in-line split-engine of claim 6 (FIG. 25), may alternatively also be utilized as a quiet running non-split-engine; in which the two said partial crankshafts (3 and 4) are permanently connected with each other with the relative crank positions shown in FIG. 25, and without said semi-automatic clutch (50), forming together a one-piece complete crankshaft comprising two units of said crank-groups, which have a permanent relative offset angle of $180^{\circ}$, and of which each said crank-group consists of two cranks having a relative offset angle of $90^{\circ}$ (FIG. 22 and FIG. 23), and the two said crank-groups forming together a crankshaft with a cross-shaped front view silhouette (FIG. 25); and also the two said partial balance shafts (93 and 94) are permanently connected with each other with the relative positions shown in FIG. 25, forming together a counterrotating one-piece complete balance shaft of primary order, having two counterweights (101 and 102) with a permanent offset angle of $180^{\circ}$; the two counterweights (91 and 92) fastened to said complete crankshaft are balancing the inertia forces and the inertia couples generated by the reciprocating engine masses, and they have inside of each said crank-group offset angles of $135^{\circ}$ to the two said cranks (FIG. 23 and FIG. 25), which means that inside of a crank-group said counterweights are placed in the bisecting plane of the angle between the two crank planes, but positioned on the other side of the crankshaft rotational axis; for balancing of said inertia forces generated by the reciprocating engine masses inside of each said crank-group; the in pairs cooperating counterweights fastened to said crank-group and to said balance shaft (that is 91 and 101; or 92 and 102) are equally oriented (FIG. 27), when the two pistons (107) of each said crank-group have equal distances, that is for each said piston $45^{\circ}$ revolution of the crankshaft, to their top dead center (as shown) or bottom dead center; each co-operating pair of counterweights (91 and 101; or 92 and 102) is rotating side by side in a common plane (which in FIG. 27 is the drawing plane); the magnitudes of said counterweights inside of each said crank-group (that is of 91 and 101; or 92 and 102) are resulting from the required counteracting force-magnitudes of primary order, which inside of each crank-group for the crankshaft and for the balance shaft, in each case, is amounting to $0.7071\ m_h.r.\omega^2$; and with said counteracting forces are also claimed adjacent force-ranges of $+/-\ 1.0\ m_h.r.\omega^2$; for said $90^{\circ}$ crank offset angle inside of each

# 0184685

(Claim 9, continued)

said crank-group are also claimed adjacent offset angle-ranges of +/- 60°, that is from 30° up to 150° crank offset, and analogous, for said 135° counterweight offset angles inside of each said crank-group are also claimed adjacent offset angle-ranges of +/- 30°, that is from 105° up to 165° counterweight offset (FIG. 23); the inertia forces and the inertia couples generated by the rotating engine masses are balanced by further rotating counterweights (not shown) fastened to said crankshafts; at the said engine embodiment the exhaust pipes of two adjoining engine cylinders, when they are belonging to one of said crank-groups, may be joined with each other at the exhaust ports of the engine cylinder head; and the engine formed according to the above specified criterions, having a one-piece crankshaft with four cranks crosswise arranged in two crank-groups, and a one-piece balance shaft of primary order counterrotating to said crankshaft, is directly utilized as a non-split-engine for any propulsion purposes; — however, said angine may again be introduced as a 4-cylinder primary engine (1) and as a 4-cylinder secondary engine (2) into larger split-engines, e.g. into the 4 + 4 = 8-cylinder split-engine (FIG. 19K), into the 4 + 6 = 10-cylinder split-engine (FIG. 20N), e.t.c., for which split-engines is again utilized said semi-automatic clutch (50) installed between their primary engine (1) and their secondary engine (2), in accordance with the foregoing claims.

10. The internal combustion split-engine of claim 1 wherein for balancing of the residual inertia couples of primary order generated by the reciprocating engine masses inside of said crank-groups, which remain after the balancing effect of said counterweights (91; 92; 101; 102; 104; and 105), additional counterweights (110; 112; 114; and 116) fastened to the front and rear ends of said partial crankshafts (3 and 4)(FIG. 25; FIG. 26; and FIG. 27), and additional counterweights (111; 113; 115; and 117) fastened to the front and rear ends of said partial balance shafts (93 and 94)(FIG. 25; FIG. 26; and FIG. 27) are utilized; said additional counterweights co-operate in pairs, and each of said partial crankshaft and each of said partial balance shaft has two said additional counterweights (110 and 112; 114 and 116; 111 and 113; 115 and 117), with a longitudinal offset and with an angular offset of 180°; said additional counterweights at each said partial crankshaft and at said partial balance shaft, that co-operates with said

- 55 -

0184685

Split-Engine for Motor-Vehicles.

(Claim 10, continued)

partial crankshaft, are so oriented that when said additional counterweights at the front ends of said partial crankshaft and said partial balance shaft are oriented parallely downwards, said additional counterweights at the rear ends of the same partial crankshaft and partial balance shaft are oriented parallely upwards; the offset angles of said additional counterweights to said other counterweights of said partial crankshafts and of said partial balance shafts, and the magnitudes of said additional counterweights are characterized by the following values:

(a)  for said primary engine and for said secondary engine having partial crankshafts with only one unit of said crank-groups (FIG. 25; FIG. 26; and FIG. 27): offset angles of said additional counterweights (110; 111; 112; and 113) to the other counterweights (91; 92; 101; and 102) of $90^{\circ}$; and at the same time offset angles of said additional counterweights (110 and 112) to the adjacent cranks of the partial crankshafts of $135^{\circ}$; and said additional counterweights are producing a counter-inertia couple of primary order of $0.3535 \, m_h . r . \omega^2 . a$; at each said partial crankshaft and at each said partial balance shaft;

( b)  for said secondary engine having a partial crankshaft with two units of said crank-groups with $120^{\circ}$ offset angle (FIG. 26): offset angles of said additional counterweights (114; 115; 116; and 117) to the other counterweights (92; 102; 104; and 105) of $30^{\circ}$, and at the same time offset angles of said additional counterweights (114 and 116) to the adjacent cranks of the partial crankshaft of $165^{\circ}$; and said additional counterweights are producing a counter-inertia couple of primary order of $0.3535 \, m_h . r . \omega^2 . a$; at said partial crankshaft, and at said partial balance shaft;

(c)  for said 4-cylinder engine according to claim 9 (FIG. 25, – but without the semi-automatic clutch 50), having a crankshaft with two units of said crank-groups with $180^{\circ}$ offset angle: offset angles of said additional counterweights (110; 110; 111; 111) to the other counterweights (91; 92; 101; and 102) of $90^{\circ}$; and at the same time offset angles of said additional counterweights (110; 110) to the adjacent cranks of the crankshaft of $135^{\circ}$; and said additional counterweights are producing a counter-inertia couple of primary order of $0.707 \, m_h . r . \omega^2 . a$; at said crankshaft, and at said balance shaft;

for said offset angles of said additional counterweights to the other counterweights are also claimed adjacent offset angle-ranges of

– 56 –

(Claim 10, continued)

+/– 30°, and for the magnitudes of said produced counter-inertia couples are also claimed inertia couple-ranges of +/– 1.0 $m_h \cdot r \cdot \omega^2 \cdot a$; and said partial balance shafts (93 and 94), each by itself, and both partial balance shafts together, are accomplishing a double balancing function, comprising balancing of inertia forces and balancing of inertia couples, which is made possible by counterweights fastened to the middle portion of said partial balance shafts, and by additional counterweight-pairs fastened to the ends of the same partial balance shafts.

11. The internal combustion split-engine of claim 1 wherein, as an alternative embodiment to said 6-cylinder split-engine of claim 7, a conventional 6-cylinder in-line engine will be halved into a 3 + 3 = 6-cylinder in-line split-engine (FIG. 18H, third version; and FIG. 29), wherein the original crank succession of the crankshaft: I + VI – 120°– II + V – 120°– III + IV – 120°–... is maintained, and the original crankshaft is divided in its middle, to result in the two partial crankshafts (3 and 4); of which the primary engine (1) obtains one partial crankshaft (3), comprising the original cranks: IV, V, and VI, having relative offset angles of 120°, and the secondary engine (2) obtains the second partial crankshaft (4) comprising the original cranks: I, II, and III, also having relative offset angles of 120°; between the two said partial crankshafts is installed said simpler embodiment of said semi-automatic clutch (50)(FIG. 6), which is periodically clutching-in and separating said two partial crankshafts in accordance with the present invention; said split-engine also have a split-balance shaft (93; 94) of primary order, counterrotating to said partial crankshafts, of which said primary engine (1) includes and drives only one partial balance shaft (93), and said secondary engine (2) includes and drives also only one partial balance shaft (94); for balancing of inertia couples of primary order generated by the reciprocating engine masses of said partial engines are used: counterweights ( 120; 121; 124; and 125) fastened to the front and rear ends of said partial crankshaft (3) and to the front and rear ends of said partial balance shaft (93) of said primary engine (1), and counterweights (122; 123; 126; and 127) fastened to the front and rear ends of said partial crankshaft (4) and to the front and rear ends of said partial balance shaft (94) of said secondary engine (2) (FIG. 29); said counterweights are co-operating in pairs, having at each partial crankshaft and at each partial balance shaft offset angles of 180°, and being so oriented that when said counterweights

(Claim 11, continued)

at the front ends of said partial crankshafts and of said partial balance shafts (that is: 121 and 125; or 123 and 127) are oriented parallely downwards, said counterweights at the rear ends of the same partial crankshafts and of the same patial balance shafts (that is: 120 and 124; or 122 and 126) are oriented parallely upwards ; said counterweights of said partial crankshafts (3 and 4) additionally having offset angles of $150^{\circ}$ to the adjacent cranks, (that is: counterweight 120 to crank VI; counterweight 121 to crank IV; counterweight 122 to crank III; and counterweight 123 to crank I)(FIG. 29); – and for said offset angles of said counterweights to said cranks are also claimed offset angle-ranges of +/– $60^{\circ}$ ; said counterweights have such magnitudes that they are producing counter-inertia couples of primary order of 0.866 $m_h.r.\omega^2.a$ ; at each said partial crankshaft and at each said partial balance shaft, which result in maximal amounts of the produced counter-inertia couples of primary order of 1.732 $m_h.r.\omega^2.a$ ; for each said partial engine, which balance the inertia couples generated by the reciprocating masses of said partial engines; and for the produced maximal amounts of said counter-inertia couples are also claimed inertia couple-ranges of +/– 1.0 $m_h.r.\omega^2.a$ ; during clutched-in condition of said partial crankshafts (3 and 4) and after said synchronization of their crank positions, said counter-inertia couples produced by the counterweights (120; 121; 122; and 123) of the two partial crankshafts will reciprocally be balanced, and said counter-inertia couples produced by the counterweights (124; 125; 126; and 127) of said partial balance shafts (93 and 94), which during said synchronized condition of said partial crankshafts are also synchronously rotating, will also be reciprocally balanced, so that said complete 3 + 3 = 6-cylinder split-engine (FIG. 29), when having their partial engines in the clutched-in and synchronized condition, is running as quiet as a conventional 6-cylinder in-line engine, well balancing the inertia forces and the inertia couples of primary and secondary order, – but which is characterized in that the primary engine (1) of said split-engine, when working singly, is also running as quiet as said complete split-engine, also having well balanced its inertia forces and inertia couples of primary and secondary order ; the clutched-in and synchronized partial crankshafts, as a complete crankshaft, have a crankshaft front view silhouette (FIG. 29), which corresponds with the original crankshaft silhouette of the 6-cylinder in-line engine; said split-engine, as a preferred firing order, utilizes

(Claim 11, continued)

also the firing order and firing distances of the conventional 6-cylinder in-line engine: $I - 120^{\circ} - V - 120^{\circ} - III - 120^{\circ} - VI - 120^{\circ} - II - 120^{\circ} - IV - 120^{\circ} - ...$, and which represents the first of the two clutched-in conditions of said split-engine; – whereas after separation of said two partial engines and said two partial crankshafts (3 and 4), and their repeated clutching-in with one complete relative revolution, and after synchronization of the crank positions of said two partial crankshafts (as also shown in FIG. 29), the firing order and the firing distances of the complete split-engine changes to: $I + VI - 240^{\circ} - III + IV - 240^{\circ} - II + V - 240^{\circ} - ...$, which represents the second clutched-in condition of said split-engine, during which are also well balanced the inertia forces and the inertia couples of primary and secondary order.

12.  The internal combustion split-engine of claim 1 wherein said roller-chain drives (11 and 12) of said primary and secondary engine (FIG. 1; FIG. 2; FIG. 6; and FIG. 14) are arranged in the division area of the two said partial engines (1 and 2), on both sides and near to said semi-automatic clutch (50), wherewith especially said roller-chain drive (11) of said primary engine (1) is placed between said engine cross-shaft (23) and the front crankshaft main bearing (106)(FIG. 6; and FIG. 14), and said helical gear (24) of said cross-shaft dips into the plane of said chain drive (11), while said roller-chain drive (12) of said secondary engine (2) is placed between the rear crankshaft main bearing (103) and said (disc shaped) cylinder body (55) of said semi-automatic clutch (50) (FIG. 6 and FIG. 14);

the closed chain-loops of said roller-chain drive (11) and of said roller-chain drive (12) of both partial engines (FIG. 2), wrap-around with their outer sides the driving sprocket-wheels of said partial crankshafts, and the sprockets of said driving crankshaft sprocket-wheels are in mesh with said outer sides of said chain-loops, – while the closed chain-loops wrap-around with their inner sides the sprocket-wheels of the driven engine auxiliary shafts, and the sprockets of said driven auxiliary shaft sprocket-wheels are in mesh with said inner sides of said chain-loops; and each roller-chain drive, which is lying in a single plane only, is simultaneously driving: said partial camshaft (9; 10), or said partial camshafts, positioned above said partial crankshaft, said oil-pump (13; 14) positioned below said partial crankshaft, and said partial balance shaft (93; 94) positioned

(Claim 12, continued)

laterally to said partial crankshaft, and counterrotating to the partial crankshaft (FIG. 2); and the sprocket-wheels of said oil-pumps (13; 14), of both roller-chain drives (11 and 12), are arranged inside of chain-troughs (97), of which the top edges are reaching above the oil level in the engine oil-pan.

13. The internal combustion split-engine of claim 1 wherein said primary engine (1) and said secondary engine (2) may as an alternative have also a common oil-supply system, comprising a connection line (88)(FIG. 1) arranged between said oil-supply system (17) of said primary engine (1) and said oil-supply system (18) of said secondary engine (2), and the separate oil-pump (14) and separate oil-filter (16) of said secondary engine may be dropped; – but said connection line (88) does not supply the rear crankshaft main bearing (103) of said secondary engine with lubrication oil, because said main bearing is lubricated by pressurized oil coming from said pressure oil switch (25), in the same way, as also with said separate oil-supply system for the secondary engine.

14. The internal combustion split-engine of claim 1 wherein said cooling system (FIG. 28) comprises for said primary engine (1) and for said secondary engine (2), separate cylinder cooling jackets (89; 90), separate water pumps (21; 22), separate double-acting two-valve thermostats (80; 83), separate by-pass lines, a common cooler (85), a common deaeration-container (87), and a heater for the vehicle interior (82), wherewith said split-cooling system operates according to the following scheme:
for a rapid warming-up of said primary engine (1) after its start, is used said two-valve thermostat (80), which through its one opened valve, the by-pass line (81), and the water pump (21) returnes the cooling water directly into the cooling jacket (89) of the primary engine; and said one valve closes said by-pass line (81) as soon as the warming-up operation is completed; while the closing movement of said one valve simultaneously opens the second valve of said thermostat (80), which conductes the (now) warm water stream from said primary engine into the cylinder cooling jacket (90) of said secondary engine (2), and into the heater (82) for the vehicle interior, for warming-up also the secondary engine, even if this engine is not working, during which operation one opened valve of the thermostat (83) of said secondary engine (2) allows a direct backflow of the water to the water pump (21) of said primary engine (1)(FIG. 28), and said

(Claim 14, continued)

one valve is closed by the thermostat (83) as soon as the warming-up operation of the secondary engine (2) is completed, - while the closing movement of said one valve simultaneously opens the second valve of said thermostat (83), which releases the water circulation through the cooler (85) of the vehicle; in the suction duct of said water pump (22) of said secondary engine (2) is installed an additional backflow-preventing valve (84), which is electromagnetically operated, and which is electrically connected with the ignition circuit (32) of said secondary engine (2), and this valve is preventing a water backflow through the not working water-pump (22), when the secondary engine (2) is already warmed-up, and said thermostat (83) is stopping the warming-up water-stream through said cylinder cooling jacket (90)(FIG. 28), - but after starting of said secondary engine (2) said backflow-preventing valve (84) is opening said suction duct to the water pump (22); in addition, said suction duct of the water pump (22), said opened backflow-preventing valve (84), and said double-acting two-valve thermostat (83) are forming together a second rapid warming-up by-pass circuit for said secondary engine (2), which automatically is set in operation, when said secondary engine (2) will be suddenly started in a not yet warmed-up condition; said two-valve thermostat (83) of said secondary engine (2) is installed in the lower area of said cylinder cooling jacket (90) of said engine, preferably in a small housing attached to the side wall of said cooling jacket, with the thermal responding element of said thermostat (83) projecting into the interior of said cooling jacket (90);

the water sectional areas of the valves of said thermostat (83) of said secondary engine (2) have substantially the double size of the water sectional areas of the valves of said thermostat (80) of said primary engine (1);

during the warming-up operation of said secondary engine (2) the water stream is flowing through said jacket (90) of this partial engine from its upper side to its bottom side (arrow "a" in FIG. 28), while the cooling water stream, after starting of said secondary engine (2), is flowing through said cooling jacket (90) from its bottom side to its upper side (arrow "b" in FIG. 28).

- 61 -

15. The internal combustion split-engine of claim 1 wherein said split-engine, as a reciprocating piston engine, is provided as a four-cycle engine and as a two-cycle engine, wherewith for two-cycle engines are utilized the same combinations of primary and secondary engines as for four-cycle engines (FIG. 17E through FIG. 21) and also the same divided crankshafts and split balance shafts (FIG. 25; FIG. 26; FIG. 27; and FIG. 29);

and for said two-cycle engines is utilized only the said simpler embodiment of the semi-automatic clutch (50)(according to FIG. 6), which after each complete relative revolution of said two partial crankshafts (3 and 4) is clutching-in and connecting the two said partial crankshafts, and is synchronizing the crank positions of said two partial crankshafts.

16. The internal combustion split-engine of claim 1 substantially as hereinbefore particularly described and as shown in FIG. 1 through FIG. 29 of the accompanying exact drawings, wherein the shapes of the shown parts and groups of parts, their relative dimensions, and their relative positions, make a significant contribution to the claimed results of said split-engine.

-----------------------------------

Continued by 12 drawing sheets
with 29 Figures.

-----------------------------------

FIG. 1

Split-Engine for Motor-Vehicles

2/12

FIG. 3

FIG. 4

FIG. 5

FIG. 2
(A—A)

FIG. 6

FIG. 7
(B-B)

FIG. 8
(C)

FIG. 9

FIG. 10

FIG. 11

FIG. 12

FIG.13

FIG. 14

Split–Engine for Motor–Vehicle. Drawing–Sheet No. 7

7/12

0184685

FIG. 15

FIG. 16

1 + 2 = 3

E

2 + 2 = 4

F

2V + 2V = 4V

G

**FIG. 17**

2 + 3 = 5 & 2 + 4 = 6 & 3 + 3 = 6

H

**FIG. 18**

2V + 4V = 6V

J

4 + 4 = 8

K

4V + 4V = 8V

L

2V + 6V = 8V

M

**FIG. 19**

4 + 6 = 10

N

**FIG. 20**

4V + 6V = 10V

P

6V + 6V = 12V

**FIG. 21**

E.T.C.

FIG. 22

FIG. 23

FIG. 24

0184685

2 + 2 = 4

$$I-270°-III-180°-II-90°-IV-180°$$
$$I-180°-IV-270°-II-180°-III-90°$$

**FIG. 25**

2 + 4 = 6

$$I-120°-III-120°-V-210°-II-120°-IV-120°-VI-30°$$
$$I-120°-III-210°-VI-120°-II-120°-IV-30°-V-120°-$$

**FIG. 26**

FIG. 27

FIG. 28

Split-Engine for Motor-Vehicles.

0184685

12/12

3 + 3 = 6

$I - 120°- V - 120°- III - 120°- VI - 120°- II - 120°- IV - 120°- ...$

$I + VI - 240°- III + IV - 240°- II + V - 240°- ...$

FIG. 29